(19) Europäisches Patentamt
European Patent Office
Office européen des brevets

(11) **EP 4 489 206 A1**

(12) **EUROPEAN PATENT APPLICATION**
published in accordance with Art. 153(4) EPC

(43) Date of publication:
**08.01.2025 Bulletin 2025/02**

(21) Application number: **23759611.9**

(22) Date of filing: **01.02.2023**

(51) International Patent Classification (IPC):
*H01M 50/414* (2021.01)   *H01M 4/13* (2010.01)
*H01M 10/058* (2010.01)   *H01M 50/403* (2021.01)
*H01M 50/443* (2021.01)   *H01M 50/449* (2021.01)

(52) Cooperative Patent Classification (CPC):
**H01M 4/13; H01M 10/058; H01M 50/403;
H01M 50/414; H01M 50/443; H01M 50/449;**
Y02E 60/10; Y02P 70/50

(86) International application number:
**PCT/JP2023/003271**

(87) International publication number:
**WO 2023/162605 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.02.2022 JP 2022030463**

(71) Applicant: **Zeon Corporation
Tokyo 100-8246 (JP)**

(72) Inventor: **UMESATO, Toshiyuki
Tokyo 100-8246 (JP)**

(74) Representative: **Maiwald GmbH
Elisenhof
Elisenstraße 3
80335 München (DE)**

(54) **NONAQUEOUS SECONDARY BATTERY ADHESIVE LAYER COMPOSITION, NONAQUEOUS SECONDARY BATTERY ADHESIVE LAYER, BATTERY MEMBER FOR NONAQUEOUS SECONDARY BATTERY, METHOD FOR PRODUCING SAME, LAMINATE FOR NONAQUEOUS SECONDARY BATTERY, METHOD FOR PRODUCING SAME, AND NONAQUEOUS SECONDARY BATTERY**

(57)   Provided is a composition for a non-aqueous secondary battery adhesive layer that can ensure inkjet ejection characteristics while also imparting excellent electrolyte solution injectability to a non-aqueous secondary battery, imparting excellent adhesiveness between battery members in a non-aqueous secondary battery, and causing a non-aqueous secondary battery to display excellent cycle characteristics. The composition for a non-aqueous secondary battery adhesive layer contains a particulate polymer, a polyalkylene glycol, and water. The polyalkylene glycol includes an ethylene oxide unit, a propylene oxide unit, or a combination thereof, has a hydroxy group as one terminal group and a hydroxy group or an alkoxy group having a carbon number of 1 to 6 as another terminal group, and has a number-average molecular weight of 150 to 1,200. The content of the polyalkylene glycol is 20 parts by mass or more per 100 parts by mass of the particulate polymer.

EP 4 489 206 A1

**Description**

TECHNICAL FIELD

The present disclosure relates to a composition for a non-aqueous secondary battery adhesive layer, an adhesive layer for a non-aqueous secondary battery, a battery member for a non-aqueous secondary battery and method of producing the same, a laminate for a non-aqueous secondary battery and method of producing the same, and a non-aqueous secondary battery.

BACKGROUND

Non-aqueous secondary batteries (hereinafter, also referred to as "secondary batteries") such as lithium ion secondary batteries have compact size, light weight, high energy density, and characteristics of being repeatedly chargeable and dischargeable (hereinafter, also referred to as "cycle characteristics"). Moreover, a secondary battery generally includes battery members for a non-aqueous secondary battery (hereinafter, also referred to as "battery members") such as a positive electrode, a negative electrode, and a separator that isolates the positive electrode and the negative electrode from each other and prevents short-circuiting between the positive and negative electrodes.

Battery members that are provided with an adhesive layer for improving adhesiveness between battery members have been used in secondary batteries. Specifically, electrodes that further include an adhesive layer formed on an electrode substrate in which an electrode mixed material layer is provided on a current collector and separators that include an adhesive layer formed on a separator substrate have been used as battery members. Such an adhesive layer is normally formed by supplying a slurry-like composition for a non-aqueous secondary battery adhesive layer (hereinafter, also referred to as a "composition for an adhesive layer") that contains a binder component and a solvent such as water onto a substrate such as an electrode substrate or a separator substrate and then drying the composition for an adhesive layer.

In recent years, the formation of an adhesive layer (adhesive material) through ejection of fine droplets of a composition for an adhesive layer from a nozzle by an inkjet method has been studied with the aim of strongly adhering battery members to each other while also causing a secondary battery to display excellent battery characteristics and also increasing secondary battery production efficiency.

For example, Patent Literature (PTL) 1 describes the application of a slurry for a non-aqueous secondary battery that contains a specific particulate polymer, a specific amount of a polyhydric alcohol compound, and water by an inkjet method. Moreover, PTL 1 reports that by using the aforementioned slurry for a non-aqueous secondary battery, it is possible to ensure strong adhesion of battery members to each other and excellent low-temperature output characteristics of a secondary battery while also enabling efficient provision of an adhesive material at a battery member surface even when an inkjet method is adopted.

CITATION LIST

Patent Literature

PTL 1: WO2019/221056A1

SUMMARY

(Technical Problem)

However, although the composition for an adhesive layer of the conventional technique described above can be applied well onto a battery member by an inkjet method and can impart excellent adhesiveness between battery members of a secondary battery, there is still room for improvement in terms of imparting excellent cycle characteristics to a secondary battery.

Moreover, it is also desirable for a secondary battery to have excellent injectability of electrolyte solution (hereinafter, also referred to as "electrolyte solution injectability") from a viewpoint of further enhancing output characteristics.

Accordingly, one object of the present disclosure is to provide a composition for a non-aqueous secondary battery adhesive layer that can ensure inkjet ejection characteristics while also imparting excellent electrolyte solution injectability to a non-aqueous secondary battery, imparting excellent adhesiveness between battery members in a non-aqueous secondary battery, and causing a non-aqueous secondary battery to display excellent cycle characteristics.

Another object of the present disclosure is to provide an adhesive layer for a non-aqueous secondary battery, a battery member for a non-aqueous secondary battery, and a laminate for a non-aqueous secondary battery that can impart excellent electrolyte solution injectability to a non-aqueous secondary battery, impart excellent adhesiveness between battery members in a non-aqueous secondary battery, and cause a non-aqueous secondary battery to display excellent cycle characteristics.

Another object of the present disclosure is to provide a non-aqueous secondary battery having excellent electrolyte solution injectability, adhesiveness between battery members, and cycle characteristics.

Another object of the present disclosure is to provide a method of producing a battery member for a non-aqueous secondary battery and a method of producing a laminate for a non-aqueous secondary battery that can impart excellent electrolyte solution injectability to a non-aqueous secondary battery, impart excellent adhesiveness between battery members in a non-aqueous secondary battery, and cause a non-aqueous secondary battery to display excellent cycle characteristics.

(Solution to Problem)

The inventor conducted diligent investigation with the aim of solving the problems set forth above. The inventor discovered that the problems set forth above can be solved with a composition for a non-aqueous secondary battery adhesive layer that contains a particulate polymer, a specific polyalkylene glycol, and water and that has a content of the polyalkylene glycol that is not less than a specific value per 100 parts by mass of the particulate polymer. In this manner, the inventor completed the present disclosure.

Specifically, with the aim of advantageously solving the problems set forth above, a presently disclosed composition for a non-aqueous secondary battery adhesive layer comprises a particulate polymer, a polyalkylene glycol, and water, wherein the polyalkylene glycol includes an ethylene oxide unit, a propylene oxide unit, or a combination thereof, the polyalkylene glycol has a hydroxy group as one terminal group and has a hydroxy group or an alkoxy group having a carbon number of not less than 1 and not more than 6 as another terminal group, the polyalkylene glycol has a number-average molecular weight of not less than 150 and not more than 1,200, and content of the polyalkylene glycol is 20 parts by mass or more per 100 parts by mass of the particulate polymer. With a composition for a non-aqueous secondary battery adhesive layer such as set forth above, it is possible to ensure inkjet ejection characteristics while also imparting excellent electrolyte solution injectability to a non-aqueous secondary battery, imparting excellent adhesiveness between battery members in a non-aqueous secondary battery, and causing a non-aqueous secondary battery to display excellent cycle characteristics.

The "number-average molecular weight" referred to in the present specification can be measured by a method described in the EXAMPLES section of the present specification.

In the presently disclosed composition for a non-aqueous secondary battery adhesive layer, the particulate polymer is preferably a particulate polymer having a core-shell structure including a core portion and a shell portion at least partially covering an outer surface of the core portion.

When the particulate polymer is a particulate polymer that has a core-shell structure, the core portion and the shell portion can be caused to respectively display separate functions, and inkjet ejection characteristics can be improved.

In the presently disclosed composition for a non-aqueous secondary battery adhesive layer, the particulate polymer preferably contains a polymer having a glass-transition temperature of 40°C or higher.

When the particulate polymer contains a polymer having a glass-transition temperature of 40°C or higher, inkjet ejection characteristics can be improved.

The "glass-transition temperature" referred to in the present specification can be measured by a measurement method described in the EXAMPLES section of the present specification.

The presently disclosed composition for a non-aqueous secondary battery adhesive layer preferably further comprises a water-soluble polymer as a dispersant.

When the composition for a non-aqueous secondary battery adhesive layer further contains a water-soluble polymer as a dispersant, inkjet ejection characteristics, adhesiveness between battery members of a non-aqueous secondary battery, electrolyte solution injectability of a non-aqueous secondary battery, and cycle characteristics of a non-aqueous secondary battery can be improved.

Moreover, with the aim of advantageously solving the problems set forth above, a presently disclosed adhesive layer for a non-aqueous secondary battery is obtained using the composition for a non-aqueous secondary battery adhesive layer set forth above. With an adhesive layer for a non-aqueous secondary battery such as set forth above, it is possible to impart excellent electrolyte solution injectability to a non-aqueous secondary battery, impart excellent adhesiveness between battery members in a non-aqueous secondary battery, and cause a non-aqueous secondary battery to display excellent cycle characteristics.

Furthermore, with the aim of advantageously solving the problems set forth above, a presently disclosed battery member for a non-aqueous secondary battery comprises: a substrate; and the adhesive layer for a non-aqueous secondary battery set forth above provided on the substrate, wherein the substrate is an electrode substrate or a separator substrate. With a battery member for a non-aqueous secondary battery such as set forth above, it is possible to impart excellent electrolyte solution injectability to a non-aqueous secondary battery, impart excellent adhesiveness between battery members in a non-aqueous secondary battery, and cause a non-aqueous secondary battery to display excellent cycle characteristics.

Also, with the aim of advantageously solving the problems set forth above, a presently disclosed method of producing a battery member for a non-aqueous secondary battery comprises: applying the composition for a non-aqueous secondary battery adhesive layer set forth above onto an electrode substrate or a separator substrate by an inkjet method; and drying the composition for a non-aqueous secondary battery adhesive layer that has been applied onto the electrode substrate or the separator substrate. With a method of producing a battery member for a non-aqueous secondary battery such as set forth above, it is possible to obtain a battery member for a non-aqueous secondary battery that can impart excellent electrolyte solution injectability to a non-aqueous secondary battery, impart excellent adhesiveness between battery members in a non-aqueous secondary battery, and cause a non-aqueous secondary battery to display excellent cycle characteristics.

In the presently disclosed method of producing a battery member for a non-aqueous secondary battery, it is preferable that a substrate is the electrode substrate and that the composition for a non-aqueous secondary battery adhesive layer is applied onto an electrode mixed material layer of the electrode substrate.

By applying the composition for a non-aqueous secondary battery adhesive layer onto an electrode mixed material layer of an electrode substrate, it is possible to obtain a battery member for a non-aqueous secondary battery that can cause a non-aqueous secondary battery to display even better cycle characteristics.

Moreover, with the aim of advantageously solving the problems set forth above, a presently disclosed laminate for a non-aqueous secondary battery comprises an electrode and a separator, wherein the electrode and the separator are adhered via the adhesive layer for a non-aqueous secondary battery set forth above. With a laminate for a non-aqueous secondary battery such as set forth above, it is possible to impart excellent electrolyte solution injectability to a non-aqueous secondary battery, impart excellent adhesiveness between battery members in a non-aqueous secondary battery, and cause a non-aqueous secondary battery to display excellent cycle characteristics.

Furthermore, with the aim of advantageously solving the problems set forth above, a presently disclosed method of producing a laminate for a non-aqueous secondary battery comprises: supplying an adhesive material to an affixing surface of at least one of an electrode and a separator; and pressing and affixing the electrode and the separator via the affixing surface to which the adhesive material has been supplied, wherein the adhesive material is obtained using the composition for a non-aqueous secondary battery adhesive layer set forth above. With a method of producing a laminate for a non-aqueous secondary battery such as set forth above, it is possible to obtain a laminate for a non-aqueous secondary battery that can impart excellent electrolyte solution injectability to a non-aqueous secondary battery, impart excellent adhesiveness between battery members in a non-aqueous secondary battery, and cause a non-aqueous secondary battery to display excellent cycle characteristics.

Also, with the aim of advantageously solving the problems set forth above, a presently disclosed non-aqueous secondary battery comprises the laminate for a non-aqueous secondary battery set forth above. A non-aqueous secondary battery such as set forth above has excellent electrolyte solution injectability, adhesiveness between battery members, and cycle characteristics.

(Advantageous Effect)

According to the present disclosure, it is possible to provide a composition for a non-aqueous secondary battery adhesive layer that can ensure inkjet ejection characteristics while also imparting excellent electrolyte solution injectability to a non-aqueous secondary battery, imparting excellent adhesiveness between battery members in a non-aqueous secondary battery, and causing a non-aqueous secondary battery to display excellent cycle characteristics.

Moreover, according to the present disclosure, it is possible to provide an adhesive layer for a non-aqueous secondary battery, a battery member for a non-aqueous secondary battery, and a laminate for a non-aqueous secondary battery that can impart excellent electrolyte solution injectability to a non-aqueous secondary battery, impart excellent adhesiveness between battery members in a non-aqueous secondary battery, and cause a non-aqueous secondary battery to display excellent cycle characteristics.

Furthermore, according to the present disclosure, it is possible to provide a non-aqueous secondary battery having excellent electrolyte solution injectability, adhesiveness between battery members, and cycle characteristics.

Also, according to the present disclosure, it is possible to provide a method of producing a battery member for a non-aqueous secondary battery and a method of producing a laminate for a non-aqueous secondary battery that can impart excellent electrolyte solution injectability to a non-aqueous secondary battery, impart excellent adhesiveness between battery members in a non-aqueous secondary battery, and cause a non-aqueous secondary battery to display excellent cycle characteristics.

BRIEF DESCRIPTION OF THE DRAWINGS

In the accompanying drawings:

FIG. 1 is a cross-sectional view schematically illustrating the structure of one example of a particulate polymer having a core-shell structure;
FIG. 2 is a diagram for describing one example of a production process of a presently disclosed laminate for a non-aqueous secondary battery; and
FIG. 3 is a diagram for describing a production process of a laminate for a non-aqueous secondary battery in examples and comparative examples.

DETAILED DESCRIPTION

The following provides a detailed description of embodiments of the present disclosure.

The presently disclosed composition for a non-aqueous secondary battery adhesive layer can be used in formation of the presently disclosed adhesive layer for a non-aqueous secondary battery (hereinafter, also referred to as an "adhesive layer"). Moreover, the presently disclosed composition for a non-aqueous secondary battery adhesive layer can be used to form an adhesive layer (adhesive material) in production of the presently disclosed battery member for a non-aqueous secondary battery and the presently disclosed laminate for a non-aqueous secondary battery (hereinafter, also referred to as a "laminate"). The presently disclosed battery member for a non-aqueous secondary battery and laminate for a non-aqueous secondary battery can be used in production of the presently disclosed non-aqueous secondary battery and can be produced, for example, by the presently disclosed method of producing a battery member for a non-aqueous secondary battery and method of producing a laminate for a non-aqueous secondary battery.

(Composition for non-aqueous secondary battery adhesive layer)

The presently disclosed composition for a non-aqueous secondary battery adhesive layer contains a particulate polymer, a specific polyalkylene glycol described below, and water and can optionally contain other components. Examples of other components include a binder, a low-molecular weight polyhydric alcohol compound, a dispersant, a thixotropic agent, and a solvent other than water.

The composition for an adhesive layer is a slurry composition having the particulate polymer dispersed in water. The particulate polymer that is contained in the presently disclosed composition for an adhesive layer is a polymer that is dispersed in water and thus is a hydrophobic polymer.

<Polyalkylene glycol>

The polyalkylene glycol that is contained in the presently disclosed composition for an adhesive layer is a linear molecule that includes an ethylene oxide unit ($-CH_2CH_2O-$), a propylene oxide unit ($-CHCH_3CH_2O-$ or $-CH_2CHCH_3O-$), or a combination thereof. Moreover, the polyalkylene glycol has a hydroxy group as one terminal group (hereinafter, also referred to as "terminal group A"), has a hydroxy group or an alkoxy group having a carbon number of not less than 1 and not more than 6 as another terminal group (hereinafter, also referred to as "terminal group B"), and has a number-average molecular weight of not less than 150 and not more than 1,200. Furthermore, the content of the polyalkylene glycol is 20 parts by mass or more per 100 parts by mass of the particulate polymer.

With the composition for an adhesive layer set forth above, it is possible to ensure inkjet ejection characteristics while also imparting excellent electrolyte solution injectability to a non-aqueous secondary battery, imparting excellent adhesiveness between battery members in a non-aqueous secondary battery, and causing a non-aqueous secondary battery to display excellent cycle characteristics. These effects are presumed to be due humectant functionality, dispersion stabilization functionality, thickening effect, surface activity, etc. of the polyalkylene glycol acting in combination with one another, though the reason for these effects is not necessarily clear. However, the examples and comparative examples described further below clearly demonstrate that when a polyalkylene glycol that includes an ethylene oxide unit, a propylene oxide unit, or a combination thereof, that has a hydroxy group as a terminal group A and a hydroxy group or an alkoxy group having a carbon number of not less than 1 and not more than 6 as a terminal group B, and that has a number-average molecular weight of not less than 150 and not more than 1,200 is used in an amount of 20 parts by mass or more per 100 parts by mass of a particulate polymer, a composition for an adhesive layer can ensure inkjet ejection characteristics while also imparting excellent electrolyte solution injectability to a secondary battery, imparting excellent adhesiveness between battery members in a secondary battery, and causing a secondary battery to display excellent cycle characteristics.

Examples of polyalkylene glycols where the terminal group B is an alkoxy group having a carbon number of not less than 1 and not more than 6 include triethylene glycol monobutyl ether, diethylene glycol monobutyl ether, and tetraethylene glycol monomethyl ether. However, the terminal group B of the polyalkylene glycol is preferably a hydroxy group because this enables improvement of adhesiveness between battery members of a secondary battery and improvement of cycle characteristics of a secondary battery.

In a case in which the polyalkylene glycol includes both an ethylene oxide unit and a propylene oxide unit, the arrangement order of ethylene oxide units and propylene oxide units may be an alternate, random, or block arrangement. Of these arrangements, it is preferable that the arrangement order of ethylene oxide units and propylene oxide units is a block arrangement.

In a case in which the polyalkylene glycol includes both an ethylene oxide unit and a propylene oxide unit, the ratio of ethylene oxide units relative to propylene oxide units (ethylene oxide units/propylene oxide units), in terms of moles, is, for example, 1/20 or more, and may be 1/10 or more, and is, for example, 20/1 or less, and may be 10/1 or less, may be 1/1 or less, or may be 1/3 or less.

The total proportional content of ethylene oxide units and propylene oxide units in the polyalkylene glycol when all repeating units included in the polyalkylene glycol are taken to be 100 mol% is preferably 70 mol% or more, more preferably 80 mol% or more, even more preferably 90 mol% or more, and particularly preferably 100 mol% (i.e., it is particularly preferable that the polyalkylene glycol is composed of only ethylene oxide units and/or propylene oxide units). In the following description, a polyalkylene glycol that is composed of only ethylene oxide units is also referred to as a "polyethylene glycol", a polyalkylene glycol that is composed of only propylene oxide units is also referred to as a "polypropylene glycol", and a polyalkylene glycol that is composed of only ethylene oxide units and propylene oxide units is also referred to as a "polyoxyethylene polyoxypropylene glycol".

A polyethylene glycol or polypropylene glycol is preferable as the polyalkylene glycol because this can improve inkjet ejection characteristics, electrolyte solution injectability of a secondary battery, and cycle characteristics of a secondary battery, and a polyethylene glycol is more preferable as the polyalkylene glycol.

Note that the proportion constituted by each type of monomer unit in a polyalkylene glycol or polymer referred to in the present specification can be measured by a nuclear magnetic resonance (NMR) method such as $^1$H-NMR or $^{13}$C-NMR.

The polyalkylene glycol may include monomer units other than an ethylene oxide unit and a propylene oxide unit. Examples of such other monomer units include a butylene oxide unit and an octene oxide unit.

However, the proportional content of other monomer units in the polyalkylene glycol when all repeating units included in the polyalkylene glycol are taken to be 100 mol% is preferably 30 mol% or less, more preferably 20 mol% or less, even more preferably 10 mol% or less, and particularly preferably 0 mol% (i.e., it is particularly preferable that the polyalkylene glycol does not include other monomer units) because this can improve inkjet ejection characteristics, electrolyte solution injectability of a secondary battery, and cycle characteristics of a secondary battery.

The number-average molecular weight of the polyalkylene glycol is preferably 300 or more, more preferably 400 or more, and even more preferably 500 or more, and is preferably 1,050 or less, more preferably 900 or less, even more preferably 700 or less, and further preferably 600 or less.

When the number-average molecular weight of the polyalkylene glycol is not less than any of the lower limits set forth above, cycle characteristics of a secondary battery can be further improved.

On the other hand, when the number-average molecular weight of the polyalkylene glycol is not more than any of the upper limits set forth above, inkjet ejection characteristics can be improved.

Moreover, when the number-average molecular weight of the polyalkylene glycol is within any of the ranges set forth above, adhesiveness between battery members of a secondary battery can be improved.

The content of the polyalkylene glycol is required to be 20 parts by mass or more per 100 parts by mass of the particulate polymer, and is preferably 40 parts by mass or more, more preferably 50 parts by mass or more, and even more preferably 60 parts by mass or more per 100 parts by mass of the particulate polymer.

When the content of the polyalkylene glycol is not less than any of the lower limits set forth above, inkjet ejection characteristics, adhesiveness between battery members of a secondary battery, electrolyte solution injectability of a secondary battery, and cycle characteristics of a secondary battery can be improved.

On the other hand, the content of the polyalkylene glycol is, for example, 150 parts by mass or less, and may be 100 parts by mass or less per 100 parts by mass of the particulate polymer.

The proportional content of the polyalkylene glycol in the composition for an adhesive layer is preferably 20 mass% or less, more preferably 10 mass% or less, and even more preferably 5 mass% or less relative to the overall composition for an adhesive layer (inclusive of a subsequently described solvent such as water).

When the proportional content of the polyalkylene glycol in the composition for an adhesive layer is not more than any of the upper limits set forth above, inkjet ejection characteristics and adhesiveness between battery members of a secondary battery can be improved.

On the other hand, the proportional content of the polyalkylene glycol in the composition for an adhesive layer is, for example, 0.1 mass% or more, or 0.5 mass% or more relative to the overall composition for an adhesive layer.

<Particulate polymer>

The particulate polymer that is contained in the presently disclosed composition for an adhesive layer is a component that functions as an adhesive material in an adhesive layer that adheres battery members such as a separator and an electrode to each other.

Note that the composition for an adhesive layer may contain just one particulate polymer or may contain two or more particulate polymers.

The proportional content of the particulate polymer in the composition for an adhesive layer is preferably 1 mass% or more, and more preferably 3 mass% or more relative to the overall composition for an adhesive layer (inclusive of a subsequently described solvent such as water), and is preferably 15 mass% or less, and more preferably 10 mass% or less relative to the overall composition for an adhesive layer.

When the proportional content of the particulate polymer is not less than any of the lower limits set forth above, adhesiveness between battery members of a secondary battery can be improved.

On the other hand, when the proportional content of the particulate polymer is not more than any of the upper limits set forth above, inkjet ejection characteristics can be improved.

The particulate polymer preferably contains a polymer having a glass-transition temperature of 40°C or higher. When the particulate polymer contains a polymer having a glass-transition temperature of 40°C or higher, inkjet ejection characteristics can be improved. Note that it is preferable that at least part of the surface of the particulate polymer is formed of a polymer having a glass-transition temperature of 40°C or higher.

The glass-transition temperature of the above-described polymer that can be contained in the particulate polymer is preferably 50°C or higher, and more preferably 80°C or higher, and is preferably 200°C or lower, and more preferably 120°C or lower.

When the glass-transition temperature of the polymer is not lower than any of the lower limits set forth above, inkjet ejection characteristics can be further improved.

On the other hand, when the glass-transition temperature of the polymer is not higher than any of the upper limits set forth above, suitable softening of the particulate polymer enables the formation of an adhesive layer that more strongly adheres battery members to each other even through pressing at normal temperature.

The glass-transition temperature of the polymer can be adjusted by altering the types and proportions of monomers used to produce the polymer, for example.

The water contact angle of the particulate polymer is preferably 10° or more, and more preferably 15° or more, and is preferably 90° or less, and more preferably 80° or less.

When the water contact angle is within any of the ranges set forth above, a particulate polymer having good hydrophobicity can be obtained, and, as a result, dispersibility of the particulate polymer in the composition for an adhesive layer can be improved. In addition, the particulate polymer can interact well with the polyalkylene glycol.

Note that the "water contact angle" can be measured by dripping 2 μL of deionized water onto the surface of a layer formed of the particulate polymer that is obtained by applying a water dispersion of the particulate polymer onto a separator substrate, and using a contact angle meter (PCA-1 produced by Kyowa Interface Science Co., Ltd.) to perform measurement with respect to the droplet 1 second after dripping.

The volume-average particle diameter of the particulate polymer is preferably 100 nm or more, more preferably 200 nm or more, even more preferably 400 nm or more, and further preferably 500 nm or more, and is preferably 1,500 nm or less, more preferably 900 nm or less, even more preferably 800 nm or less, and further preferably 700 nm or less.

When the volume-average particle diameter of the particulate polymer is not less than any of the lower limits set forth above, it is possible to inhibit deterioration of battery characteristics due to increased secondary battery resistance caused by blocking of lithium ion paths in a substrate (electrode or separator).

On the other hand, when the volume-average particle diameter of the particulate polymer is not more than any of the upper limits set forth above, it is possible to further inhibit nozzle clogging in a situation in which the composition for an adhesive layer is applied by an inkjet method, thereby enabling improvement of inkjet ejection characteristics.

The "volume-average particle diameter" referred to in the present specification represents the particle diameter at which, in a particle diameter distribution by volume measured by laser diffraction, cumulative volume calculated from a small diameter end of the distribution reaches 50% and can be measured by a measurement method described in the EXAMPLES section of the present specification.

The particulate polymer may be particles that are formed of a single polymer or may be particles obtained by combining a plurality of polymers (particles formed through physical or chemical bonding of two or more polymers). In particular, from a viewpoint that a plurality of characteristics can be displayed, it is preferable that the particulate polymer is particles obtained by combining a plurality of polymers, more preferable that the particulate polymer is particles having a core-shell structure that includes a core portion and a shell portion at least partially covering an outer surface of the core portion; particles having a side-by-side structure that is a structure where two or more polymers are arranged beside one another; particles having a snowman structure that is a structure where a central polymer is partially exposed from an outer shell; or particles having an octopus ocellatus structure that is a structure where spherical polymer particles have particles of a different polymer embedded in the surface thereof to form a unified structure, and even more preferable that the particulate polymer is particles having a core-shell structure.

The following describes a particulate polymer having a core-shell structure as one example.

«Particulate polymer having core-shell structure»

The particulate polymer having a core-shell structure has a core-shell structure that includes a core portion and a shell portion covering an outer surface of the core portion. By using the particulate polymer having a core-shell structure, it is possible to improve inkjet ejection characteristics.

The shell portion may completely cover the outer surface of the core portion or may partially cover the outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion.

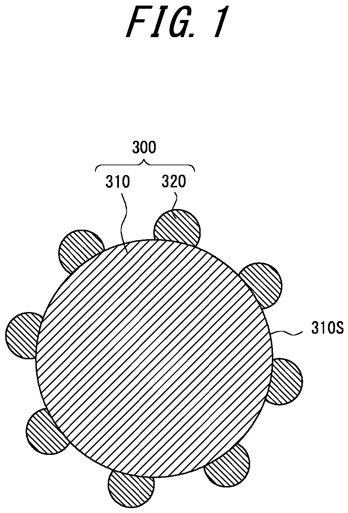

FIG. 1 illustrates cross-sectional structure of one example of the particulate polymer having a core-shell structure. A particulate polymer 300 illustrated in FIG. 1 has a core-shell structure including a core portion 310 and a shell portion 320. The core portion 310 is a portion that is further inward than the shell portion 320 in the particulate polymer 300. The shell portion 320 is a portion that covers an outer surface 310S of the core portion 310 and is normally a portion that is furthest outward in the particulate polymer 300. In the example illustrated in FIG. 1, the shell portion 320 partially covers the outer surface 310S of the core portion 310 rather than completely covering the outer surface 310S of the core portion 310.

Note that the particulate polymer may include any constituent element other than the core portion and the shell portion described above so long as the expected effects are not significantly lost. Specifically, the particulate polymer may, for example, include a portion inside of the core portion that is formed of a different polymer to the core portion. In one specific example, a residual seed particle may be present inside of the core portion in a situation in which seed particles are used in production of the particulate polymer by seeded polymerization. However, from a viewpoint of more noticeably displaying the expected effects, it is preferable that the particulate polymer is composed of only the core portion and the shell portion.

[Core portion]

-Glass-transition temperature (Tg)-

The glass-transition temperature of a polymer of the core portion of the particulate polymer is preferably -50°C or higher, and more preferably -45°C or higher, and is preferably 60°C or lower, more preferably 35°C or lower, even more preferably 0°C or lower, and further preferably -15°C or lower.

When the glass-transition temperature of the polymer of the core portion is not lower than any of the lower limits set forth above, inkjet ejection characteristics can be improved.

On the other hand, when the glass-transition temperature of the polymer of the core portion is not higher than any of the upper limits set forth above, the polymer of the core portion can display good adhesiveness, and it is consequently possible to form an adhesive layer that more strongly adheres battery members to each other even through pressing at normal temperature. Moreover, when the glass-transition temperature of the polymer of the core portion is not higher than any of the upper limits set forth above, shedding of components contained in an adhesive layer (also referred to as "dusting") can be sufficiently inhibited.

Note that the glass-transition temperature of the polymer of the core portion can be adjusted by altering the types and proportions of monomers used to produce the polymer of the core portion, for example.

-Chemical composition-

Examples of monomers that can be used to produce the polymer of the core portion include vinyl chloride monomers such as vinyl chloride and vinylidene chloride; vinyl acetate monomers such as vinyl acetate; aromatic vinyl monomers such as styrene, $\alpha$-methylstyrene, styrene sulfonic acid, butoxystyrene, and vinylnaphthalene; vinyl amine monomers such as vinyl amine; vinyl amide monomers such as N-vinylformamide and N-vinylacetamide; non-fluorine-containing (meth)acrylic acid ester monomers such as methyl acrylate, ethyl acrylate, n-butyl acrylate, 2-ethylhexyl acrylate, methyl methacrylate, ethyl methacrylate, n-butyl methacrylate, and cyclohexyl methacrylate; (meth)acrylamide monomers such as acrylamide and methacrylamide; (meth)acrylonitrile monomers such as acrylonitrile and methacrylonitrile; fluorine-containing (meth)acrylic acid ester monomers such as 2-(perfluorohexyl)ethyl methacrylate and 2-(perfluorobutyl)ethyl acrylate; maleimide; and maleimide derivatives such as phenylmaleimide. One of these monomers may be used individually, or two or more of these monomers may be used in combination in a freely selected ratio.

Note that in the present disclosure, "(meth)acryl" is used to indicate "acryl" and/or "methacryl", and "(meth)acrylonitrile" is used to indicate "acrylonitrile" and/or "methacrylonitrile".

Moreover, in the present disclosure, "non-fluorine-containing (meth)acrylic acid ester monomers" and "fluorine-containing (meth)acrylic acid ester monomers" are referred to collectively as "(meth)acrylic acid ester monomers".

Of these monomers, it is preferable to use at least a (meth)acrylic acid ester monomer as a monomer used in production of the polymer of the core portion from a viewpoint of causing even stronger adhesion of battery members to each other via an adhesive layer, and more preferable to use a (meth)acrylic acid ester monomer and an aromatic vinyl monomer in combination or to use a (meth)acrylic acid ester monomer and a (meth)acrylonitrile monomer in combination. In other words, it is preferable that the polymer of the core portion includes at least a (meth)acrylic acid ester monomer unit, and more preferable that the polymer of the core portion includes a (meth)acrylic acid ester monomer unit and an aromatic vinyl monomer unit or a (meth)acrylonitrile monomer unit.

The (meth)acrylic acid ester monomer that can be used in production of the polymer of the core portion is preferably a non-fluorine-containing (meth)acrylic acid ester monomer. In other words, the (meth)acrylic acid ester monomer unit that can be included in the polymer of the core portion is preferably a non-fluorine-containing (meth)acrylic acid ester monomer unit.

The phrase "includes a monomer unit" as used in the present disclosure means that "a polymer obtained with the monomer includes a repeating unit derived from the monomer".

The term "(meth)acrylic acid ester monomer" as used in the present disclosure refers to a monofunctional (meth)acrylic acid ester monomer that includes only one group displaying polymerization reactivity.

From a viewpoint of causing even stronger adhesion of battery members to each other via an adhesive layer, the proportion constituted by (meth)acrylic acid ester monomer units in the polymer of the core portion when all repeating units (all monomer units) in the particulate polymer (in the polymer of the core portion and the polymer of the shell portion in a case in which the particulate polymer is composed of only the core portion and the shell portion) are taken to be 100 mass% is preferably 5 mass% or more, more preferably 10 mass% or more, and particularly preferably 20 mass% or more, and is preferably 98 mass% or less, and more preferably 96 mass% or less.

In a case in which the polymer of the core portion includes a (meth)acrylic acid ester monomer unit and an aromatic vinyl monomer unit, from a viewpoint of causing even stronger adhesion of battery members to each other via an adhesive layer, the proportion constituted by (meth)acrylic acid ester monomer units in the polymer of the core portion when all repeating units (all monomer units) in the particulate polymer (in the polymer of the core portion and the polymer of the shell portion in a case in which the particulate polymer is composed of only the core portion and the shell portion) are taken to be 100 mass% is preferably 5 mass% or more, more preferably 10 mass% or more, and particularly preferably 20 mass% or more, and is preferably 80 mass% or less, more preferably 75 mass% or less, and even more preferably 70 mass% or less, and the proportion constituted by aromatic vinyl monomer units in the polymer of the core portion when all repeating units (all monomer units) in the particulate polymer (in the polymer of the core portion and the polymer of the shell portion in a case in which the particulate polymer is composed of only the core portion and the shell portion) are taken to be 100 mass% is preferably 15 mass% or more, more preferably 20 mass% or more, and particularly preferably 25 mass% or more, and is preferably 90 mass% or less, more preferably 80 mass% or less, and particularly preferably 70 mass% or less.

In a case in which the polymer of the core portion includes a (meth)acrylic acid ester monomer unit and a (meth)acrylonitrile monomer unit, from a viewpoint of causing even stronger adhesion of battery members to each other via an adhesive layer, the proportion constituted by (meth)acrylic acid ester monomer units in the polymer of the core portion when all repeating units (all monomer units) in the particulate polymer (in the polymer of the core portion and the polymer of the shell portion in a case in which the particulate polymer is composed of only the core portion and the shell portion) are taken to be 100 mass% is preferably 70 mass% or more, more preferably 80 mass% or more, and particularly preferably 85 mass% or more, and is preferably 98 mass% or less, and more preferably 96 mass% or less, and the proportion constituted by (meth)acrylonitrile monomer units in the polymer of the core portion when all repeating units (all monomer units) in the particulate polymer (in the polymer of the core portion and the polymer of the shell portion in a case in which the particulate polymer is composed of only the core portion and the shell portion) are taken to be 100 mass% is preferably 1 mass% or more, and more preferably 1.5 mass% or more, and is preferably 10 mass% or less, and more preferably 5 mass% or less.

The polymer of the core portion can include an acid group-containing monomer unit. The acid group-containing monomer may be a monomer that includes an acid group such as a carboxy group-containing monomer, a sulfo group-containing monomer, or a phosphate group-containing monomer, for example.

The carboxy group-containing monomer may be a monocarboxylic acid, a dicarboxylic acid, or the like, for example. The monocarboxylic acid may be acrylic acid, methacrylic acid, crotonic acid, or the like, for example. The dicarboxylic acid may be maleic acid, fumaric acid, itaconic acid, or the like, for example.

The sulfo group-containing monomer may be vinyl sulfonic acid, methyl vinyl sulfonic acid, (meth)allyl sulfonic acid, (meth)acrylic acid 2-sulfoethyl, 2-acrylamido-2-methylpropane sulfonic acid, 3-allyloxy-2-hydroxypropane sulfonic acid, or the like, for example.

The phosphate group-containing monomer may be 2-(meth)acryloyloxyethyl phosphate, methyl-2-(meth)acryloyloxyethyl phosphate, ethyl-(meth)acryloyloxyethyl phosphate, or the like, for example.

Note that in the present disclosure, "(meth)allyl" is used to indicate "allyl" and/or "methallyl", and "(meth)acryloyl" is used to indicate "acryloyl" and/or "methacryloyl".

Of these examples, carboxy group-containing monomers are preferable as the acid group-containing monomer, of which, monocarboxylic acids are preferable, and (meth)acrylic acid is more preferable.

One acid group-containing monomer may be used individually, or two or more acid group-containing monomers may be used in combination in a freely selected ratio.

The proportion constituted by acid group-containing monomer units in the polymer of the core portion when all repeating units (all monomer units) in the particulate polymer (in the polymer of the core portion and the polymer of the shell portion in a case in which the particulate polymer is composed of only the core portion and the shell portion) are taken to be 100 mass% is preferably 0.1 mass% or more, and more preferably 1 mass% or more, and is preferably 15 mass% or less, and more preferably 10 mass% or less. By keeping the proportion constituted by acid group-containing monomer units within any of the ranges set forth above, it is possible to increase dispersibility of the polymer of the core portion and facilitate formation of a shell portion partially covering the outer surface of the core portion with respect to the outer surface of the polymer of the core portion during production of the particulate polymer.

The polymer of the core portion preferably includes a cross-linkable monomer unit in addition to the monomer units described above. A cross-linkable monomer is a monomer that can form a cross-linked structure during or after polymerization through heating or irradiation with energy rays.

The cross-linkable monomer may, for example, be a polyfunctional monomer that includes two or more groups displaying polymerization reactivity in the monomer. Examples of such polyfunctional monomers include divinyl monomers such as divinylbenzene, 1,3-butadiene, isoprene, and allyl methacrylate; di(meth)acrylic acid ester monomers such as ethylene dimethacrylate, diethylene glycol dimethacrylate, ethylene glycol dimethacrylate, diethylene glycol diacrylate, and 1,3-butylene glycol diacrylate; tri(meth)acrylic acid ester monomers such as trimethylolpropane trimethacrylate and trimethylolpropane triacrylate; epoxy group-containing ethylenically unsaturated monomers such as allyl glycidyl ether and glycidyl methacrylate; γ-methacryloxypropyltrimethoxysilane; and N-methylolacrylamide. Of these cross-linkable monomers, di(meth)acrylic acid ester monomers are more preferable. One of these cross-linkable monomers may be used individually, or two or more of these cross-linkable monomers may be used in combination in a freely selected ratio.

The proportion constituted by cross-linkable monomer units in the polymer of the core portion when all repeating units (all monomer units) in the particulate polymer (in the polymer of the core portion and the polymer of the shell portion in a case in which the particulate polymer is composed of only the core portion and the shell portion) are taken to be 100 mass% is preferably 0.05 mass% or more, and more preferably 0.1 mass% or more, and is preferably 10 mass% or less, more preferably 5 mass% or less, and particularly preferably 3 mass% or less. By keeping the proportion constituted by cross-linkable monomer units within any of the ranges set forth above, it is possible to cause even stronger adhesion of battery members to each other via an adhesive layer.

[Shell portion]

-Glass-transition temperature (Tg)-

The glass-transition temperature of the polymer of the shell portion of the particulate polymer is preferably 40°C or higher, more preferably 50°C or higher, and even more preferably 80°C or higher, and is preferably 200°C or lower, and more preferably 120°C or lower.

When the glass-transition temperature of the polymer of the shell portion is not lower than any of the lower limits set forth above, inkjet ejection characteristics can be further improved.

On the other hand, when the glass-transition temperature of the polymer of the shell portion is not higher than any of the upper limits set forth above, suitable softening of the particulate polymer enables the formation of an adhesive layer that can more strongly adhere battery members to each other even through pressing at normal temperature.

The glass-transition temperature of the polymer of the shell portion can be adjusted by altering the types and proportions of monomers used to produce the polymer of the shell portion, for example.

Moreover, the glass-transition temperature of the polymer of the shell portion is preferably at least 25°C higher than the previously described glass-transition temperature of the polymer of the core portion from a viewpoint of retaining the shape of the particulate polymer after adhesion of battery members to each other and suppressing an increase of resistance.

-Chemical composition-

Examples of monomers that can be used to produce the polymer of the shell portion include the same monomers as those given as examples of monomers that can be used to produce the polymer of the core portion. One of such monomers may be used individually, or two or more of such monomers may be used in combination in a freely selected ratio.

Of these monomers, it is more preferable that at least any one of a (meth)acrylic acid ester monomer, an aromatic vinyl monomer, a (meth)acrylonitrile monomer, and an acid group-containing monomer is used as a monomer used in production of the polymer of the shell portion from a viewpoint of causing even stronger adhesion of battery members to each via an adhesive layer. In other words, it is preferable that the polymer of the shell portion includes at least any one of a (meth)acrylic acid ester monomer unit, an aromatic vinyl monomer unit, a (meth)acrylonitrile monomer unit, and an acid group-containing monomer unit.

Moreover, from a viewpoint of causing even stronger adhesion of battery members to each other via an adhesive layer, the proportion constituted by (meth)acrylic acid ester monomer units in the polymer of the shell portion when all repeating units (all monomer units) in the particulate polymer (in the polymer of the core portion and the polymer of the shell portion in a case in which the particulate polymer is composed of only the core portion and the shell portion) are taken to be 100 mass% is preferably 1 mass% or more, and more preferably 1.5 mass% or more, and is preferably 10 mass% or less, and more preferably 6 mass% or less.

From a viewpoint of causing even stronger adhesion of battery members to each other via an adhesive layer, the proportion constituted by aromatic vinyl monomer units in the polymer of the shell portion when all repeating units (all monomer units) in the particulate polymer (in the polymer of the core portion and the polymer of the shell portion in a case in which the particulate polymer is composed of only the core portion and the shell portion) are taken to be 100 mass% is preferably 2 mass% or more, and more preferably 3 mass% or more, and is preferably 10 mass% or less, and more preferably 5 mass% or less.

The proportion constituted by (meth)acrylonitrile monomer units in the polymer of the shell portion when all repeating units (all monomer units) in the particulate polymer (in the polymer of the core portion and the polymer of the shell portion in a case in which the particulate polymer is composed of only the core portion and the shell portion) are taken to be 100 mass% is preferably 0.1 mass% or more, and more preferably 0.2 mass% or more, and is preferably 2 mass% or less, more preferably 1 mass% or less, and even more preferably 0.5 mass% or less.

The proportion constituted by an acid group-containing monomer units in the polymer of the shell portion when all repeating units (all monomer units) in the particulate polymer (in the polymer of the core portion and the polymer of the shell portion in a case in which the particulate polymer is composed of only the core portion and the shell portion) are taken to be 100 mass% is preferably 0.01 mass% or more, and more preferably 0.03 mass% or more, and is preferably 1 mass% or less, more preferably 0.5 mass% or less, and even more preferably 0.2 mass% or less.

[Mass proportion of shell portion among total of core portion and shell portion]

The mass proportion of the shell portion among the total of the core portion and the shell portion in the particulate polymer is preferably 2 mass% or more, and is preferably 20 mass% or less, more preferably 15 mass% or less, even more preferably 10 mass% or less, and particularly preferably 5 mass% or less.

When the mass proportion of the shell portion is not less than the lower limit set forth above, inkjet ejection characteristics can be further improved.

On the other hand, when the mass proportion of the shell portion is not more than any of the upper limits set forth above, it is possible to form an adhesive layer that can more strongly adhere battery members to each other even through pressing at normal temperature.

Note that the mass proportion of the shell portion among the total of the core portion and the shell portion is calculated from a subsequently described ratio of thicknesses of the core portion and the shell portion and the specific gravity of the particulate polymer.

[Ratio of average thickness of shell portion relative to volume-average particle diameter]

A ratio of the average thickness of the shell portion relative to the volume-average particle diameter of the particulate polymer is preferably 0.1% or more, and more preferably 0.5% or more, and is preferably 15% or less, and more preferably 10% or less.

When the average thickness of the shell portion is not less than any of the lower limits set forth above, inkjet ejection characteristics can be even further improved.

On the other hand, when the average thickness of the shell portion is not more than any of the upper limits set forth above, battery members can be even more strongly adhered to each other when the battery members are pressed at normal temperature.

The average thickness of the shell portion of the particulate polymer can be determined through observation of cross-sectional structure of the particulate polymer using a transmission electron microscope (TEM). Specifically, the maximum thickness of the shell portion is measured in the cross-sectional structure of the particulate polymer using a TEM, and an average value for the maximum thickness of the shell portion in 20 or more arbitrarily selected particles of the particulate polymer is taken to be the average thickness of the shell portion. However, in a case in which the shell portion is formed of particles of a polymer and in which the particles of the polymer form the shell portion as a monolayer without overlapping with one another in a radial direction of a particle of the particulate polymer, the number-average particle diameter of the particles forming the shell portion is taken to be the average thickness of the shell portion.

[Production method of particulate polymer having core-shell structure]

The above-described particulate polymer can be produced, for example, by stepwise polymerization in which the ratio of monomers for the polymer of the core portion and monomers for the polymer of the shell portion is changed over time. Specifically, the particulate polymer can be produced by continuous, multi-step emulsion polymerization or multi-step suspension polymerization in which a polymer of a preceding step is sequentially covered by a polymer of a subsequent step.

The following describes one example of a case in which the particulate polymer is obtained by multi-step emulsion polymerization.

In the polymerization, an anionic surfactant such as sodium dodecylbenzenesulfonate or sodium dodecyl sulfate, a non-ionic surfactant such as polyoxyethylene nonylphenyl ether or sorbitan monolaurate, or a cationic surfactant such as octadecylamine acetate, for example, can be used as an emulsifier in accordance with a standard method. Moreover, a peroxide such as t-butyl peroxy-2-ethylhexanoate, potassium persulfate, or cumene peroxide or an azo compound such as 2,2'-azobis(2-methyl-N-(2-hydroxyethyl)propionamide) or 2,2'-azobis(2-amidinopropane) hydrochloride, for example, can be used as a polymerization initiator.

The polymerization procedure involves first mixing monomers for forming the core portion and the emulsifier, and performing emulsion polymerization as one batch to obtain a particulate polymer that forms the core portion. The above-described particulate polymer can then be obtained by performing polymerization of monomers for forming the shell portion in the presence of the particulate polymer forming the core portion.

In this polymerization, it is preferable that the monomers for forming the polymer of the shell portion are supplied into the polymerization system continuously or divided into a plurality of portions in a situation in which a particulate polymer having the outer surface of a core portion partially covered by a shell portion is to be produced. As a result of the monomers for forming the polymer of the shell portion being supplied into the polymerization system in portions or continuously, the polymer forming the shell portion can be formed as particles that bond to the core portion such as to form a shell portion that partially covers the core portion.

Although a particulate polymer having a core-shell structure is described above as one example, the polymer of the core portion or the polymer of the shell portion described above may be used as a polymer forming a particulate polymer that has a structure other than a core-shell structure. In other words, in the case of a particulate polymer that is formed of a single polymer, this particulate polymer may be formed of the polymer that was described above as the polymer of the core portion or may be formed of the polymer that was described above as the polymer of the shell portion. Moreover, in the case of a particulate polymer that is obtained by combining a plurality of polymers and that has a structure other than a core-shell structure, this particulate polymer may be a particulate polymer that is obtained by combining the polymer that was described above as the polymer of the core portion and the polymer that was described above as the polymer of the shell portion.

<Solvent>

The presently disclosed composition for an adhesive layer contains water as a solvent and may optionally contain a solvent other than water. The solvent other than water may, for example, be an organic solvent such as an alicyclic hydrocarbon (cyclopentane, cyclohexane, etc.), an aromatic hydrocarbon (toluene, xylene, etc.), a ketone (ethyl methyl ketone, cyclohexanone, etc.), an ester (ethyl acetate, butyl acetate, $\gamma$-butyrolactone, $\varepsilon$-caprolactone, etc.), a nitrile (acetonitrile, propionitrile, etc.), an ether (tetrahydrofuran, etc.), or an alcohol (methanol, ethanol, isopropanol, etc.).

<Binder>

The presently disclosed composition for an adhesive layer may contain a binder. The binder prevents shedding of components contained in an adhesive layer.

The binder may be formed of a polymer that dissolves in the solvent or may be formed of a polymer that does not dissolve in the solvent. Note that in the case of a polymer that does not dissolve in the solvent, the polymer can be present in the form of a particulate binder in the composition for an adhesive layer.

-Glass-transition temperature (Tg)-

The glass-transition temperature of a polymer serving as the binder is preferably 25°C or lower, more preferably 10°C or lower, and even more preferably 0°C or lower.

When the glass-transition temperature of the polymer is 25°C or lower, shedding of components contained in an adhesive layer can be sufficiently inhibited, and adhesiveness between battery members of a secondary battery can be improved.

-Chemical composition-

Examples of monomers that may be used to produce the polymer serving as the binder include the same monomers as those given as examples of monomers that can be used to produce the polymer of the core portion of the previously described particulate polymer. For example, a (meth)acrylic acid ester monomer, a (meth)acrylonitrile monomer, an aromatic vinyl monomer, an acid group-containing monomer, a (meth)acrylamide monomer, a cross-linkable monomer, or the like can be used as a monomer that is used to produce the polymer serving as the binder.

Moreover, a (meth)acrylic acid ester monomer that includes a polar group such as 2-hydroxyethyl (meth)acrylate or 2-hydroxypropyl (meth)acrylate, for example, can be used as a monomer that is used to produce the polymer serving as the binder.

Note that one of the above-described monomers may be used individually, or two or more of the above-described monomers may be used in combination in a freely selected ratio.

In one embodiment, a (meth)acrylic acid ester monomer, a (meth)acrylonitrile monomer, an acid group-containing monomer, a (meth)acrylamide monomer, and a cross-linkable monomer may be used in combination or an aromatic vinyl monomer, an acid group-containing monomer, a polar group-containing (meth)acrylic acid ester monomer, and a cross-linkable monomer may be used in combination as monomers that are used to produce the polymer serving as the binder. In other words, the polymer serving as the binder may include a (meth)acrylic acid ester monomer unit, a (meth)acrylonitrile monomer unit, an acid group-containing monomer unit, a (meth)acrylamide monomer unit, and a cross-linkable monomer unit or may include an aromatic vinyl monomer unit, an acid group-containing monomer unit, a polar group-containing (meth)acrylic acid ester monomer unit, and a cross-linkable monomer unit.

The (meth)acrylic acid ester monomer that can be used in production of the polymer serving as the binder is preferably a non-fluorine-containing (meth)acrylic acid ester monomer. In other words, the (meth)acrylic acid ester monomer unit that can be included in the polymer serving as the binder is preferably a non-fluorine-containing (meth) acrylic acid ester monomer unit.

The proportion constituted by (meth)acrylic acid ester monomer units in the polymer serving as the binder is not specifically limited, but when all repeating units (all monomer units) included in the polymer are taken to be 100 mass%, the proportion is, for example, 40 mass% or more, and may be 50 mass% or more, or may be 60 mass% or more, and is, for example, 90 mass% or less, and may be 85 mass% or less.

The proportion constituted by (meth)acrylonitrile monomer units in the polymer serving as the binder is not specifically limited, but when all repeating units (all monomer units) included in the polymer are taken to be 100 mass%, the proportion is, for example, 1 mass% or more, and may be 5 mass% or more, or may be 10 mass% or more, and is, for example, 20 mass% or less, and may be 15 mass% or less.

The proportion constituted by acid group-containing monomer units in the polymer serving as the binder is not specifically limited, but when all repeating units (all monomer units) included in the polymer are taken to be 100 mass%, the proportion is, for example, 0.5 mass% or more, and may be 1 mass% or more, or may be 2 mass% or more, and is, for example, 10 mass% or less, and may be 7 mass% or less, or may be 5 mass% or less.

The proportion constituted by (meth)acrylamide monomer units in the polymer serving as the binder is not specifically limited, but when all repeating units (all monomer units) included in the polymer are taken to be 100 mass%, the proportion is, for example, 0.1 mass% or more, and may be 0.5 mass% or more, or may be 1 mass% or more, and is, for example, 5 mass% or less, and may be 4 mass% or less, or may be 2 mass% or less.

The proportion constituted by aromatic vinyl monomer units in the polymer serving as the binder is not specifically limited, but when all repeating units (all monomer units) included in the polymer are taken to be 100 mass%, the proportion is, for example, 20 mass% or more, and may be 40 mass% or more, or may be 55 mass% or more, and is, for example, 80 mass% or less, and may be 70 mass% or less, or may be 65 mass% or less.

The proportion constituted by polar group-containing (meth)acrylic acid ester monomer units in the polymer serving as the binder is not specifically limited, but when all repeating units (all monomer units) included in the polymer are taken to be 100 mass%, the proportion is, for example, 0.1 mass% or more, and may be 0.5 mass% or more, and is, for example, 3 mass% or less, and may be 1.5 mass% or less.

The proportion constituted by cross-linkable monomer units in the polymer serving as the binder is not specifically limited, but when all repeating units (all monomer units) included in the polymer are taken to be 100 mass%, the proportion is, for example, 1 mass% or more, and may be 2 mass% or more, or may be 3 mass% or more, and is, for example, 50 mass% or less, and may be 40 mass% or less, or may be 35 mass% or less.

In a case in which the polymer serving as the binder includes a cross-linkable monomer unit and a (meth) acrylonitrile monomer unit, the proportion constituted by cross-linkable monomer units in the polymer is not specifically limited, but when all repeating units (all monomer units) included in the polymer are taken to be 100 mass%, the proportion is, for example, 1 mass% or more, and may be 2 mass% or more, or may be 3 mass% or more, and is, for example, 6 mass% or less, and may be 5 mass% or less, or may be 4 mass% or less.

In a case in which the polymer serving as the binder includes a cross-linkable monomer unit and an aromatic vinyl monomer unit, the proportion constituted by cross-linkable monomer units in the polymer is not specifically limited, but when all repeating units (all monomer units) included in the polymer are taken to be 100 mass%, the proportion is, for example, 10 mass% or more, and may be 20 mass% or more, or may be 30 mass% or more, and is, for example, 50 mass% or less, and may be 40 mass% or less, or may be 35 mass% or less.

In a case in which a particulate binder is used as the binder, the volume-average particle diameter of the particulate binder is preferably 50 nm or more, more preferably 100 nm or more, and even more preferably 200 nm or more, and is preferably 600 nm or less, more preferably 500 nm or less, and even more preferably 400 nm or less. When the volume-average particle diameter of the particulate binder is within any of the ranges set forth above, battery members can be more strongly adhered to each other via an adhesive material.

The amount of the binder is not specifically limited but is preferably 1 part by mass or more, and more preferably 5 parts by mass or more per 100 parts by mass of the particulate polymer, and is preferably 20 parts by mass or less, and more preferably 15 parts by mass or less per 100 parts by mass of the particulate polymer. When the amount of the binder is within any of the ranges set forth above, shedding of components contained in an adhesive layer can be sufficiently prevented while also improving cycle characteristics of a secondary battery.

Note that it may be the case that the composition for an adhesive layer does not contain a binder. When a binder is not included, this makes it possible to suppress an increase of internal resistance and to further improve cycle characteristics.

The water contact angle of the polymer serving as the binder is preferably 10° or more, and more preferably 15° or more, and is preferably 90° or less, and more preferably 80° or less.

When the water contact angle is within any of the ranges set forth above, a particulate binder having good hydrophobicity can be obtained, and, as a result, dispersibility of the particulate binder in the composition for an adhesive layer can be improved. Moreover, this particulate binder can interact well with the polyalkylene glycol.

Note that the "water contact angle" can be measured by dripping 2 μL of deionized water onto the surface of a layer formed of the polymer serving as the binder that is obtained by applying a water dispersion or aqueous solution of the binder onto a separator substrate, and using a contact angle meter (PCA-1 produced by Kyowa Interface Science Co., Ltd.) to perform measurement with respect to the droplet 1 second after dripping.

[Production method of polymer serving as binder]

The polymer serving as the binder can be produced through polymerization in an aqueous solvent such as water, for example, of a monomer composition that contains the above-described monomers, for example, but is not specifically limited to being produced in this manner. The proportion constituted by each monomer in the monomer composition is normally the same as the proportion constituted by each monomer unit in the polymer. Commonly known polymerization methods and polymerization reactions can be adopted as the polymerization method and the polymerization reaction without any specific limitations.

<Low-molecular weight polyhydric alcohol compound>

The low-molecular weight polyhydric alcohol compound is a compound that has a molecular weight of less than 150 and that includes at least two hydroxy groups (-OH) in one molecule. The inclusion of the low-molecular weight polyhydric alcohol compound in the composition for an adhesive layer can improve inkjet ejection characteristics. Although the reason for this is not certain, it is thought to be due to a low-molecular weight polyhydric alcohol compound that includes a plurality of hydroxy groups in one molecule functioning as a humectant, which makes it possible to inhibit vaporization of water in the composition for an adhesive layer inside of a nozzle (particularly vaporization of water inside of a nozzle during an idle period when supply is temporarily suspended), and, as a result, makes it possible to inhibit deposition of an adhesive material such as the particulate polymer.

The low-molecular weight polyhydric alcohol compound may be propylene glycol, ethylene glycol, glycerin, 1,3-propanediol, 1,4-butanediol, or the like, for example. Of these low-molecular weight polyhydric alcohol compounds, glycerin is preferable. One of these low-molecular weight polyhydric alcohol compounds may be used individually, or two or more of these low-molecular weight polyhydric alcohol compounds may be used in combination in a freely selected ratio.

The content of the low-molecular weight polyhydric alcohol compound per 100 parts by mass of the particulate polymer is preferably 20 parts by mass or more, more preferably 40 parts by mass or more, even more preferably 50 parts by mass or more, and further preferably 55 parts by mass or more, and is preferably 400 parts by mass or less, more preferably 300 parts by mass or less, even more preferably 250 parts by mass or less, and further preferably 200 parts by mass or less.

When the content of the low-molecular weight polyhydric alcohol compound is not less than any of the lower limits set forth above, inkjet ejection characteristics can be further improved.

On the other hand, when the content of the low-molecular weight polyhydric alcohol compound is not more than any of the upper limits set forth above, an excessive increase of viscosity of the composition for an adhesive layer can be suppressed, and, as a result, inkjet ejection characteristics can be further improved.

The content of the low-molecular weight polyhydric alcohol compound per 100 parts by mass of water is preferably 1 part by mass or more, more preferably 2 parts by mass or more, and even more preferably 3 parts by mass or more, and is preferably 80 parts by mass or less, more preferably 50 parts by mass or less, and even more preferably 29 parts by mass or less.

When the content of the low-molecular weight polyhydric alcohol compound is not less than any of the lower limits set forth above, inkjet ejection characteristics can be further improved.

On the other hand, when the content of the low-molecular weight polyhydric alcohol compound is not more than any of the upper limits set forth above, an excessive increase of viscosity of the composition for an adhesive layer can be suppressed, and, as a result, inkjet ejection characteristics can be further improved.

<Dispersant>

The presently disclosed composition for an adhesive layer preferably further contains a water-soluble polymer as a dispersant. When the composition for an adhesive layer contains a water-soluble polymer as a dispersant, inkjet ejection characteristics, adhesiveness between battery members of a secondary battery, electrolyte solution injectability of a secondary battery, and cycle characteristics of a secondary battery can be improved. Note that the presently disclosed composition for an adhesive layer may include a dispersant other than a water-soluble polymer.

When a polymer is said to be "water-soluble" in the present specification, this means that when 0.5 g of the polymer is dissolved in 100 g of water at 25°C, insoluble content is less than 1.0 mass%. Also note that in the case of a substance for which the solubility thereof varies depending on the pH of water, the substance is considered to be "water-soluble" so long as there is at least one pH at which the substance satisfies the definition of "water-soluble" set forth above.

The water-soluble polymer may be a salt of polyacrylic acid such as an ammonium acrylate polymer or sodium polyacrylate; polyvinyl alcohol; polyvinylpyrrolidone; a copolymer of acrylic acid or an acrylic acid salt with vinyl alcohol; a fully or partially saponified product of a copolymer of maleic anhydride, maleic acid, or fumaric acid with vinyl acetate; modified polyvinyl alcohol; modified polyacrylic acid; a polycarboxylic acid; an ethylene-vinyl alcohol copolymer; a vinyl acetate polymer; an acrylamide polymer into which a carboxy group and/or a cyano group has been introduced; or the like, without any specific limitations. Of these water-soluble polymers, a salt of polyacrylic acid such as an ammonium acrylate polymer or sodium polyacrylate is preferable.

The content of the dispersant per 100 parts by mass of the particulate polymer is preferably 0.1 parts by mass or more, and more preferably 0.5 parts by mass or more, and is preferably 5 parts by mass or less, and more preferably 2 parts by mass or less.

When the content of the dispersant is not less than any of the lower limits set forth above, dispersibility of the particulate polymer in the composition for an adhesive layer can be improved.

On the other hand, when the content of the dispersant is not more than any of the upper limits set forth above, inkjet ejection characteristics can be improved.

<Thixotropic agent>

The thixotropic agent is a component that imparts viscousness to the composition for an adhesive layer. Moreover, the thixotropic agent also has adhesiveness and electrolyte solution resistance and thus can also fulfill a role of assisting adhesion of components of the composition for an adhesive layer and battery members in a secondary battery. The thixotropic agent is typically a polymer having a number-average molecular weight of 10,000 or more.

Commonly known thixotropic agents such as natural polymers, semisynthetic polymers, and synthetic polymers, for example, can be used as the thixotropic agent without any specific limitations. In particular, the thixotropic agent is preferably carboxymethyl cellulose (CMC), a salt of carboxymethyl cellulose, or cellulose nanofibers (CNF).

From a viewpoint of ensuring good battery characteristics of a secondary battery, the content of the thixotropic agent per 100 parts by mass of the particulate polymer is preferably 0.05 parts by mass or more, and is preferably 5 parts by mass or less, more preferably 1 part by mass or less, and even more preferably 0.4 parts by mass or less.

<Production method of composition for non-aqueous secondary battery adhesive layer>

No specific limitations are placed on the method by which the presently disclosed composition for a non-aqueous secondary battery adhesive layer is produced. For example, the presently disclosed composition for a non-aqueous secondary battery adhesive layer can be produced by stirring and mixing the particulate polymer, the polyalkylene glycol, and other optional components in the presence of the solvent. A known method can be adopted as the stirring and mixing method without any specific limitations. Specifically, a typical stirring vessel, ball mill, sand mill, bead mill, pigment disperser, ultrasonic disperser, grinding machine, homogenizer, planetary mixer, FILMIX, or the like can be used. Although no specific limitations are placed on the mixing conditions, the mixing can normally be performed within a range of not lower than room temperature and not higher than 80°C for not less than 10 minutes and not more than several hours.

(Adhesive layer for non-aqueous secondary battery)

The presently disclosed adhesive layer for a non-aqueous secondary battery is a layer that is obtained using the presently disclosed composition for a non-aqueous secondary battery adhesive layer. Moreover, the presently disclosed adhesive layer for a non-aqueous secondary battery functions as an adhesive material for adhering battery members that are used in a non-aqueous secondary battery. Furthermore, the presently disclosed adhesive layer for a non-aqueous secondary battery can be obtained by the presently disclosed method of producing an adhesive layer for a non-aqueous secondary battery that is described further below, for example.

The presently disclosed adhesive layer for a non-aqueous secondary battery is a dried product obtained through drying of the presently disclosed composition for a non-aqueous secondary battery adhesive layer. Consequently, the presently disclosed adhesive layer for a non-aqueous secondary battery contains at least the particulate polymer and the polyalkylene glycol described above and optionally contains other components such as described above.

The presently disclosed adhesive layer for a non-aqueous secondary battery can impart excellent electrolyte solution injectability to a non-aqueous secondary battery, impart excellent adhesiveness between battery members in a non-aqueous secondary battery, and cause a non-aqueous secondary battery to display excellent cycle characteristics as a result of the presently disclosed composition for a non-aqueous secondary battery adhesive layer being used.

Although the particulate polymer is present in a particulate form in the composition for an adhesive layer, the particulate polymer may have a particulate form or may have any other form in the adhesive layer.

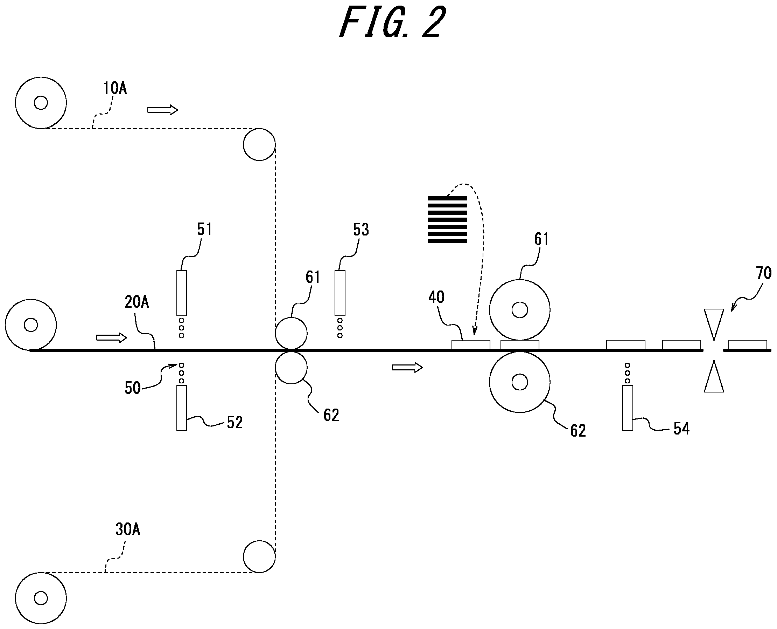

The adhesive layer can be formed with any plan-view shape such as a striped shape, a dotted shape, or a lattice shape without any specific limitations. In particular, it is preferable that the adhesive layer is formed with a dotted shape from a viewpoint of reducing resistance of a secondary battery. The dotted adhesive layer can be obtained by an inkjet method using a coating machine (51 to 54 in FIG. 2) such as described further below, for example.

The dot diameter of an adhesive layer that is arranged in a dotted pattern is preferably 10 μm or more, and more preferably 20 μm or more, and is preferably 300 μm or less, and more preferably 200 μm or less.

When the dot diameter of the adhesive layer is not less than any of the lower limits set forth above, adhesive strength between battery members can be increased.

On the other hand, when the dot diameter of the adhesive layer is not more than any of the upper limits set forth above, deterioration of output characteristics of a secondary battery can be inhibited.

The dot thickness of the adhesive layer arranged in a dotted pattern is preferably 5 μm or more. When the dot thickness of the adhesive layer is not less than the lower limit set forth above, adhesive strength between battery members can be increased.

The mass per unit area of the adhesive layer is preferably 0.02 g/m$^2$ or more, and is preferably 1.0 g/m$^2$ or less, and more preferably 0.35 g/m$^2$ or less.

When the mass per unit area of the adhesive layer is not less than the lower limit set forth above, adhesive strength between battery members can be sufficiently ensured.

On the other hand, when the mass per unit area of the adhesive layer is not more than any of the upper limits set forth above, sufficiently high output characteristics of a secondary battery can be ensured.

A ratio of coverage of the adhesive layer is preferably 1% or more, and more preferably 5% or more, and is preferably 50% or less, and more preferably 30% or less.

When the ratio of coverage of the adhesive layer is not less than any of the lower limits set forth above, adhesive strength between battery members can be ensured.

On the other hand, when the ratio of coverage of the adhesive layer is not more than any of the upper limits set forth above, sufficiently high output characteristics of a secondary battery can be ensured.

The "ratio of coverage of the adhesive layer" at a given surface or region refers to the proportion occupied by the area of a portion that is covered by the adhesive layer among the overall area of the surface or region [i.e., (area of portion covered by adhesive layer/area of entire surface or region) × 100(%)].

Note that in a case in which a composition for an adhesive layer that contains a particulate polymer, a polyalkylene glycol, and water is used, the term "adhesive layer" in the "ratio of coverage of the adhesive layer" refers to a dried product of the composition for an adhesive layer.

The ratio of coverage of the adhesive layer can be adjusted by altering the arrangement pattern of the adhesive layer that is disposed (coated) in each region. Specifically, in a case in which the adhesive layer is arranged and disposed (coated) in a dotted pattern in a given region, the ratio of coverage of the adhesive layer in that region can be adjusted by altering the radius of dots and the distance between centers of dots of the adhesive layer. For example, in a region where the adhesive layer is disposed (coated) in a dotted pattern having dots formed at fixed intervals in two orthogonal directions, the ratio of coverage of the adhesive layer can be determined by the following formula (1) using the distances (pitches) x and y between centers of the dots and the radius r of the dots.

$$\text{Ratio of coverage of adhesive layer} = \{\pi r^2/(x \cdot y)\} \times 100(\%) \cdots (1)$$

(Battery member for non-aqueous secondary battery)

The presently disclosed battery member for a non-aqueous secondary battery includes a substrate and the presently disclosed adhesive layer for a non-aqueous secondary battery provided on the substrate. The substrate is an electrode substrate or a separator substrate. The presently disclosed battery member for a non-aqueous secondary battery can be obtained by the presently disclosed method of producing a battery member for a non-aqueous secondary battery that is described further below, for example.

The presently disclosed battery member for a non-aqueous secondary battery can impart excellent electrolyte solution injectability to a non-aqueous secondary battery, impart excellent adhesiveness between battery members in a non-aqueous secondary battery, and cause a non-aqueous secondary battery to display excellent cycle characteristics as a result of including the presently disclosed adhesive layer for a non-aqueous secondary battery.

<Electrode substrate>

The electrode substrate is a substrate that includes a current collector and an electrode mixed material layer that is provided on the current collector. For example, an electrode formed of an electrode substrate having an electrode mixed material layer formed at one side or both sides of a current collector or an electrode having a porous membrane layer further formed on an electrode mixed material layer of an electrode substrate can be used as the electrode substrate.

Note that any current collector, electrode mixed material layer, and porous membrane layer that can be used in the field of secondary batteries, such as any of those described in JP2013-145763A, for example, can be used as the current collector, the electrode mixed material layer, and the porous membrane layer without any specific limitations.

<Separator substrate>

A known separator such as an organic separator substrate can be used as the separator substrate without any specific limitations. The organic separator substrate is a porous member that is formed of an organic material. Examples of the organic separator substrate include microporous membranes and non-woven fabrics containing a polyolefin resin such as polyethylene or polypropylene, an aromatic polyamide resin, or the like, with a microporous membrane or non-woven fabric made of polyethylene being preferable due to the excellent strength thereof. Moreover, from a viewpoint of safety, a heat-resistant separator obtained by coating the above-described separator with a ceramic is preferable.

Furthermore, the separator substrate may have a porous membrane layer formed at one side or both sides. The term "porous membrane layer" refers to a layer containing non-conductive particles such as described in JP2013-145763A, for example.

(Method of producing battery member for non-aqueous secondary battery)

The presently disclosed method of producing a battery member for a non-aqueous secondary battery includes applying the presently disclosed composition for a non-aqueous secondary battery adhesive layer onto an electrode substrate or a separator substrate by an inkjet method (application step) and drying the composition for a non-aqueous secondary battery adhesive layer that has been applied onto the electrode substrate or the separator substrate (drying step).

<Application step>

In the application step, droplets of the presently disclosed composition for an adhesive layer are applied onto the electrode substrate or the separator substrate via a nozzle of an inkjet-type coating machine. A conventional and commonly known inkjet-type coating machine can be used. For example, application can be performed using a coating machine (51 to 54 in FIG. 2) such as described further below. It is preferable that the composition for an adhesive layer is applied onto an electrode substrate or a separator substrate from a viewpoint of production efficiency, and it is preferable that the composition for an adhesive layer is applied onto an electrode substrate from a viewpoint of easily performing the drying step. Also, it is more preferable that the composition for an adhesive layer is applied onto an electrode mixed material layer of the electrode substrate. This is because even when the presently disclosed composition for an adhesive layer is applied onto an electrode mixed material layer of an electrode substrate, impregnation of the electrode mixed material layer with the composition for an adhesive layer is inhibited as a result of improvement of thickening through the polyalkylene glycol.

The application conditions by an inkjet method are not specifically limited so long as the composition for an adhesive layer can be applied onto a substrate, and the conditions can be adjusted as appropriate depending on the desired form of the obtained adhesive layer (plan-view shape, dot diameter, dot thickness, dot pitch, ratio of coverage, mass per unit area, etc.).

«Electrode substrate and separator substrate»

A known electrode substrate or separator substrate can be used as the electrode substrate or separator substrate without any specific limitations. For example, an electrode substrate or separator substrate such as previously described in the "Battery member for non-aqueous secondary battery" section can be used.

<Drying step>

In the drying step, the composition for an adhesive layer that has been applied onto the substrate is dried to form, on the substrate, an adhesive layer that is formed of a dried product of the composition for an adhesive layer. The drying can be performed by a commonly known method without any specific limitations. Examples of drying methods that may be used include drying using a heating device such as a heater, a dryer, or a heating roller. Although no specific limitations are placed on the drying conditions, the drying temperature is preferably not lower than 50°C and not higher than 90°C, and the drying time is preferably not less than 1 second and not more than 120 seconds.

(Laminate for non-aqueous secondary battery)

The presently disclosed laminate for a non-aqueous secondary battery includes an electrode and a separator, wherein the electrode and the separator are adhered via the presently disclosed adhesive layer for a non-aqueous secondary battery. The presently disclosed laminate for a non-aqueous secondary battery can impart excellent electrolyte solution injectability to a non-aqueous secondary battery, impart excellent adhesiveness between battery members in a non-aqueous secondary battery, and cause a non-aqueous secondary battery to display excellent cycle characteristics as a result of the electrode and the separator being adhered via the presently disclosed adhesive layer for a non-aqueous secondary battery.

The electrode that is affixed to the separator to form the laminate may be just a positive electrode, may be just a negative electrode, or may be both a positive electrode and a negative electrode. Moreover, in a case in which both a positive electrode and a negative electrode are affixed to the separator to obtain the laminate, the number of positive electrodes, the number of negative electrodes, and the number of separators included in the laminate may be 1 or may be 2 or more. In other words, the structure of the presently disclosed laminate may be any of the following structures (1) to (6).

(1) Positive electrode/Separator
(2) Negative electrode/Separator
(3) Positive electrode/Separator/Negative electrode
(4) Positive electrode/Separator/Negative electrode/Separator
(5) Separator/Positive electrode/Separator/Negative electrode
(6) Structure in which positive electrodes and negative electrodes are stacked alternately with separators in-between (for example, "separator/negative electrode/separator/positive electrode/separator/negative electrode... /separator/positive electrode", etc.)

<Electrode>

A known electrode can be used as the electrode without any specific limitations. For example, an electrode such as previously described in the "Battery member for non-aqueous secondary battery" section can be used.

<Separator>

A known separator can be used as the separator without any specific limitations. For example, a separator such as previously described in the "Battery member for non-aqueous secondary battery" section can be used.

<Adhesive layer>

The adhesive layer that adheres the electrode and the separator is a dried product of the presently disclosed composition for a non-aqueous secondary battery adhesive layer. In other words, the dried product contains at least a polymer originating from the particulate polymer and a polymer originating from the polyalkylene glycol and optionally contains other components such as previously described.
The preferred form of the adhesive layer (dot diameter, dot thickness, dot pitch, ratio of coverage, mass per unit area, etc.) is the same as previously described in the "Adhesive layer for non-aqueous secondary battery" section.
Although the particulate polymer is present in a particulate form in the composition for an adhesive layer, the particulate polymer may have a particulate form or may have any other form in the adhesive layer of the laminate.

(Method of producing laminate for non-aqueous secondary battery)

The presently disclosed method of producing a laminate for a non-aqueous secondary battery includes supplying an adhesive material to an affixing surface (i.e., a surface where the adhesive material (adhesive layer) is to be formed) of at least one of an electrode and a separator (supply step) and pressing and affixing the electrode and the separator via the affixing surface to which the adhesive material has been supplied (affixing step). The presently disclosed method of producing a laminate for a non-aqueous secondary battery may include cutting the obtained affixed body (cutting step) after the affixing step.

<Supply step>

In the supply step, an adhesive material is supplied to an affixing surface of at least one of an electrode (positive electrode or negative electrode) and a separator. Supply of the adhesive material can be performed by applying the presently disclosed composition for an adhesive layer by an inkjet method and then drying the composition for an adhesive layer, for example, but is not specifically limited to being performed in this manner. Alternatively, supply of the adhesive material can be performed by transferring (stacking), onto the affixing surface, an adhesive layer that has been obtained through peeling from a releasable substrate.
A commonly known releasable substrate can be used as the releasable substrate without any specific limitations.
The conditions of the inkjet method are not specifically limited so long as the composition for an adhesive layer can be applied, and the conditions can be adjusted as appropriate depending on the desired form of the obtained adhesive material (plan-view shape, dot diameter, dot thickness, dot pitch, ratio of coverage, mass per unit area, etc.).
In a case in which the composition for an adhesive layer is applied by an inkjet method, the composition for an adhesive layer can be dried while conveying the electrode and the separator to an affixing start position without bringing another member into contact with the affixing surface to which the composition for an adhesive layer has been supplied. By not bringing another member into contact with the affixing surface to which the composition for an adhesive layer has been supplied, problems such as blocking do not occur, which makes it possible to efficiently produce a laminate. In a case in which an adhesive layer that has been obtained through peeling from a releasable substrate is supplied, it is not necessary to perform drying.
Note that the term "affixing start position" as used in the present specification refers to a position at which an affixing surface of the electrode and an affixing surface of the separator come into contact when the electrode and the separator are being affixed to each other.
The conveying of the electrode and the separator can be performed by any conveying mechanism such as a roller, a belt conveyor, a manipulator, or a suction band, for example, without any specific limitations. Of these examples, it is preferable that at least one of the electrode and the separator is conveyed by a roller from a viewpoint of further increasing production efficiency of a laminate.
Moreover, drying of the composition for an adhesive layer can be performed using a heating device such as a heater, a dryer, or a heating roller without any specific limitations. The temperature during drying of the electrode and/or separator to which the composition for an adhesive layer has been supplied is not specifically limited but is preferably not lower than 50°C and not higher than 90°C. Moreover, the drying time is not specifically limited but is preferably not less than 1 second and not more than 120 seconds.

<Affixing step>

In the affixing step, the electrode and the separator are affixed via the affixing surface. The affixing is performed through pressing of a laminate in which the electrode and the separator are stacked with the affixing surface in-between.

The pressing temperature of the laminate is not specifically limited so long as it is a temperature at which the electrode and the separator can be affixed, but is preferably 0°C or higher, more preferably 10°C or higher, and even more preferably 20°C or higher, and is preferably 35°C or lower, more preferably 30°C or lower, and even more preferably 25°C or lower.

When the pressing temperature of the laminate is not lower than any of the lower limits set forth above, adhesiveness of battery members to each other can be improved.

On the other hand, when the pressing temperature of the laminate is not higher than any of the upper limits set forth above, laminate production efficiency can be increased.

The pressing of the laminate is preferably performed with a pressure of 0.1 MPa or more, and more preferably 0.5 MPa or more, and is preferably performed with a pressure of 5 MPa or less.

When the pressing of the laminate is performed with a pressure that is not less than any of the lower limits set forth above, adhesiveness of battery members to each other can be improved.

On the other hand, when the pressing of the laminate is performed with a pressure that is not more than the upper limit set forth above, deformation of the laminate (crushing of an electrode mixed material layer or separator, etc.) can be effectively inhibited.

The pressing time of the laminate is preferably 20 seconds or less, and more preferably 15 seconds or less.

When the pressing time of the laminate is not more than any of the upper limits set forth above, laminate production efficiency can be increased.

<Cutting step>

The cutting step is a step of cutting the affixed body obtained in the affixing step to desired dimensions. The cutting can, for example, be performed using any cutting machine that can be used in the field of secondary battery production, such as a cutting machine that sandwiches and cuts an affixed body through cutting blades from both sides in a thickness direction of the affixed body.

«Electrode and separator»

A known electrode and a known separator can be used as the electrode and the separator without any specific limitations. For example, an electrode and a separator such as previously described in the "Battery member for non-aqueous secondary battery" section can be used.

«Adhesive material»

The adhesive material that adheres the electrode and the separator is a dried product of the presently disclosed composition for a non-aqueous secondary battery adhesive layer. In other words, this dried product contains at least a polymer originating from the particulate polymer and a polymer originating from the polyalkylene glycol and optionally contains other components such as previously described.

The preferred form of the adhesive material (dot diameter, dot thickness, dot pitch, ratio of coverage, mass per unit area, etc.) is the same as previously described in the "Adhesive layer for non-aqueous secondary battery" section.

Although the particulate polymer is present in a particulate form in the composition for a non-aqueous secondary battery adhesive layer, the particulate polymer may have a particulate form or may have any other form in the adhesive material (adhesive layer) of the laminate after pressing.

The following describes one example of a production process of the presently disclosed laminate for a non-aqueous secondary battery with reference to FIG. 2.

With reference to FIG. 2, an elongated first separator web 10A that has been fed from a first separator web roll is affixed to one surface of a negative electrode material formed of an elongated negative electrode web 20A that has been fed from a negative electrode web roll via an adhesive material that has been supplied from a coating machine 51. Together therewith, an elongated second separator web 30A that has been fed from a second separator web roll is affixed to the other surface of the negative electrode material formed of the negative electrode web 20A via an adhesive material that has been supplied from a coating machine 52. Note that the affixing can be performed using pressure bonding rollers 61 and 62, for example. Positive electrodes 40 are affixed at a specific arrangement pitch to a surface of the first separator web 10A at the opposite side thereof to the negative electrode web 20A via an adhesive material that has been supplied from a coating machine 53, and thus an affixed body that includes a positive electrode is obtained. Note that in FIG. 2, an adhesive material is supplied from a coating machine 54 to a surface of the second separator web 30A at the opposite side thereof to the negative electrode web 20A so that when laminates obtained by cutting the affixed body between positive electrodes 40 that are adjacent in the longitudinal direction are stacked in order to produce a stack, the laminates can be adhered well to each other. The affixed body is cut using a cutting machine 70 to obtain a laminate.

(Non-aqueous secondary battery)

The presently disclosed non-aqueous secondary battery includes the presently disclosed laminate for a non-aqueous secondary battery. For example, the presently disclosed non-aqueous secondary battery may include electrodes (positive electrode and negative electrode), an electrolyte solution, and a separator. At least one of the positive electrode and the negative electrode is affixed to the separator via the presently disclosed adhesive layer for a non-aqueous secondary battery to form the presently disclosed laminate for a non-aqueous secondary battery. The presently disclosed non-aqueous secondary battery has excellent electrolyte solution injectability, adhesiveness between battery members, and cycle characteristics as a result of including the presently disclosed laminate for a non-aqueous secondary battery.

<Electrodes>

Known electrodes can be used as the electrodes that are used in the presently disclosed secondary battery without any specific limitations. For example, an electrode such as previously described in the "Battery member for non-aqueous secondary battery" section can be used.

<Separator>

A known separator can be used as the separator that is used in the presently disclosed secondary battery without any specific limitations. For example, a separator such as previously described in the "Battery member for non-aqueous secondary battery" section can be used.

<Electrolyte solution>

An organic electrolyte solution obtained by dissolving a supporting electrolyte in an organic solvent is normally used as the electrolyte solution that is used in the presently disclosed secondary battery. For example, when the non-aqueous secondary battery is a lithium ion secondary battery, a lithium salt is used as the supporting electrolyte. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

Moreover, a known additive such as vinylene carbonate (VC), fluoroethylene carbonate (FEC), or ethyl methyl sulfone may be added to the electrolyte solution.

(Production method of non-aqueous secondary battery)

The presently disclosed non-aqueous secondary battery can be produced by, for example, performing rolling, folding, or the like of a stack obtained through stacking of the laminate, as necessary, in accordance with the battery shape, placing the stack in a device container (battery container), injecting the electrolyte solution into the device container, and sealing the device container. The laminate itself may be used as the stack, or a plurality of the laminate may be stacked to produce the stack. Moreover, the stack may be produced by stacking an additional battery member (electrode and/or separator, etc.) with the laminate. The presently disclosed secondary battery may be provided with an overcurrent preventing device such as a fuse or a PTC device, an expanded metal, a lead plate, or the like, as necessary, in order to prevent pressure increase inside the secondary battery and occurrence of overcharging or overdischarging. The shape of the secondary battery may be a coin type, button type, sheet type, cylinder type, prismatic type, flat type, or the like, for example.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Various measurements and evaluations in the examples and comparative examples were performed by the following methods.

<Glass-transition temperature>

A water dispersion of a particulate polymer or particulate binder produced in each example or comparative example was dried at a temperature of 130°C for 1 hour to obtain a measurement sample. The measurement sample was weighed into an aluminum pan in an amount of 10 mg and was measured by a differential scanning calorimeter (EXSTAR DSC6220 produced by SII NanoTechnology Inc.) under conditions prescribed by JIS Z8703 with a measurement temperature range of -100°C to 200°C and a heating rate of 10°C/min to obtain a differential scanning calorimetry (DSC) curve. Note that an empty aluminum pan was used as a reference. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

<Volume-average particle diameter>

The volume-average particle diameter of a particulate polymer or particulate binder produced in each example or comparative example was measured by laser diffraction. Specifically, in a particle size distribution (by volume) obtained using a laser diffraction particle size analyzer (produced by Beckman Coulter, Inc.; product name: LS-13 320) with a water dispersion (solid content concentration: 0.1 mass%) containing the produced particulate polymer or particulate binder as a sample, the particle diameter at which cumulative volume calculated from a small diameter end of the distribution reached 50% was determined and was taken to be the volume-average particle diameter D50 (nm).

<Number-average molecular weight>

A polyalkylene glycol used in each example or comparative example was adjusted to a concentration of 0.05% through dilution with water. Next, the diluted polyalkylene glycol was filtered using a 0.45 $\mu$m membrane filter made of PTFE to obtain a sample. This sample was analyzed by gel permeation chromatography under the following conditions to determine the number-average molecular weight of the polyalkylene glycol.

Apparatus: Gel permeation chromatograph GPC (produced by Agilent Technologies, Inc.; product name: 1260 Infinity II HPLC)
Detector: Differential refractive index detector RI (produced by Agilent Technologies, Inc.; product name: 1260 Infinity II RI Detector)
Column: TSKgel GMPWXL × 2 columns ($\varnothing$7.8 mm × 30 cm; produced by Tosoh Corporation)
Solvent: 0.1 M Tris buffer solution (pH 9, 0.1 M potassium chloride added)
Flow rate: 0.7 mL/min
Column temperature: 40°C
Injection volume: 0.2 mL
Standard sample: Monodisperse polyethylene oxide produced by Tosoh Corporation and Sigma-Aldrich

<Inkjet ejection characteristics>

An ejection test was performed for a composition for a non-aqueous secondary battery adhesive layer produced in each example or comparative example using an ejection test kit (IJK-200S produced by MICROJET Corporation) mounted with a high performance glass nozzle head (IJHD-100 produced by MICROJET Corporation). Ejection characteristics were evaluated by the following standard.

A: Ejection can be restarted even after 15 minutes or more of resting time
B: Ejection can be restarted after 10 minutes or more of resting time but becomes impossible to restart after less than 15 minutes of resting time
C: Ejection can be restarted after 5 minutes or more of resting time but becomes impossible to restart after less than 10 minutes of resting time
D: Ejection becomes impossible to restart after less than 5 minutes of resting time

<Adhesive strength between electrode and separator (dry adhesive strength)>

A negative electrode coated with an adhesive layer (adhesive material) at one side under the same conditions as in each example or comparative example and a separator were pressed under conditions of a temperature of 25°C and a pressure of 1 MPa for 10 seconds and were affixed. The affixed laminate (i.e., a laminate in which one negative electrode and one separator were affixed via an adhesive material) was sampled to obtain a test specimen.
This test specimen was placed with the surface at the current collector-side of the negative electrode facing downward, and cellophane tape was affixed to the surface at the current collector-side of the negative electrode. Tape prescribed by JIS Z 1522 was used as the cellophane tape. Moreover, the cellophane tape was fixed to a horizontal test stage in advance. One end of the separator was pulled vertically upward at a pulling speed of 50 mm/min to peel off the separator, and the stress during this peeling was measured.
A total of 6 measurements were made in this manner. An average value of the stress was determined as the peel strength, and adhesiveness between the negative electrode and the separator was evaluated by the following standard. A larger peel strength indicates higher adhesiveness between the electrode (negative electrode) and the separator.

A: Peel strength of 5.0 N/m or more
B: Peel strength of not less than 3.0 N/m and less than 5.0 N/m
C: Peel strength of not less than 1.0 N/m and less than 3.0 N/m
D: Peel strength of less than 1.0 N/m

<Electrolyte solution injectability>

A laminate for a non-aqueous secondary battery produced in each example or comparative example was enclosed in an aluminum packing case serving as a battery case, and electrolyte solution (solvent: ethylene carbonate/diethyl carbonate/vinylene carbonate = 68.5/30/1.5 (volume ratio); electrolyte: $LiPF_6$ of 1 M in concentration) was injected such that no air remained. This was performed with various different injection times.
The minimum injection time with which spurting out of electrolyte solution during injection did not occur was determined and was evaluated by the following standard. A shorter minimum injection time indicates better electrolyte solution injectability.

A: Minimum injection time of less than 100 s
B: Minimum injection time of not less than 100 s and less than 300 s
C: Minimum injection time of not less than 300 s and less than 500 s
D: Minimum injection time of 500 s or more

<Cycle characteristics>

First, a lithium ion secondary battery produced in each example or comparative example was constant-current constant-voltage (CC-CV) charged to 4.3 V in an atmosphere having a temperature of 25°C for cell preparation. The prepared cell was discharged to 3.0 V by 0.2C and 1C constant-current methods in an atmosphere having a temperature of -10°C, and the electric capacity was determined for each thereof. A discharge capacity maintenance rate expressed by the ratio of the electric capacities was determined (= (electric capacity at 1C/electric capacity at 0.2C) × 100(%)). These measurements were performed for 5 lithium ion secondary battery cells, and an average value of the determined discharge capacity maintenance rates was determined as an output characteristic.

Next, the lithium ion secondary battery was tightened in a pressing jig such that the surface pressure was 1 MPa and was subsequently subjected to a cycling test at 45°C. The cycling test conditions were set as 500 charge/discharge cycles of 1C CC+CV charging (4.3 V, 1/50C cut) and 1C CC discharging (3.0 V cut). Thereafter, the lithium ion secondary battery was cooled to 25°C while still tightened in the pressing jig, and an output characteristic was measured in the same manner as described above. A resistance maintenance rate (%) between before and after cycling was calculated (= discharge capacity maintenance rate after cycling test/discharge capacity maintenance rate before cycling test $\times$ 100) and was evaluated by the following standard. A larger resistance maintenance rate between before and after cycling indicates a smaller increase of resistance in the cycling test, and thus indicates better cycle characteristics.

A: Resistance maintenance rate of 80% or more
B: Resistance maintenance rate of not less than 60% and less than 80%
C: Resistance maintenance rate of not less than 40% and less than 60%
D: Resistance maintenance rate of less than 40%

(Example 1)

<Production of particulate polymer>

A reactor including a stirrer was supplied with 100 parts of deionized water and 0.1 parts of ammonium persulfate. The gas phase was purged with nitrogen gas, and the temperature was raised to 80°C. Meanwhile, a monomer composition for core portion formation was obtained in a separate vessel by mixing 40 parts of deionized water, 0.2 parts of sodium dodecylbenzenesulfonate as an emulsifier, 91.1 parts of n-butyl acrylate as a non-fluorine-containing (meth)acrylic acid ester monomer, 1.9 parts of methacrylic acid as an acid group-containing monomer, 0.1 parts of ethylene glycol dimethacrylate as a cross-linkable monomer, and 1.9 parts of acrylonitrile as a (meth)acrylonitrile monomer. This monomer composition for core portion formation was continuously added into the reactor over 3 hours so as to perform a polymerization reaction at a temperature of 80°C. Polymerization was continued until a polymerization conversion rate of 95% was reached to yield a water dispersion containing a particulate polymer forming a core portion. Next, a monomer composition for shell portion formation containing 4.75 parts of styrene as an aromatic vinyl monomer and 0.25 parts of methacrylic acid as an acid group-containing monomer was continuously supplied into this water dispersion over 60 minutes, and polymerization was continued. At the point at which the polymerization conversion rate reached 98%, cooling was performed to quench the reaction to thereby produce a water dispersion containing a particulate polymer.

The volume-average particle diameter and glass-transition temperature of the obtained particulate polymer were measured. The results are shown in Table 1.

Upon observation of the cross-sectional structure of the particulate polymer using a transmission electron microscope (TEM), the particulate polymer was confirmed to have a core-shell structure in which a shell portion partially covered the outer surface of a core portion.

<Production of composition for non-aqueous secondary battery adhesive layer>

A composition for a non-aqueous secondary battery adhesive layer was obtained by adding 60 parts of polyethylene glycol 600 (number-average molecular weight: 600) as a polyalkylene glycol, 60 parts of glycerin as a low molecular weight polyhydric alcohol, and 1 part in terms of solid content of an ammonium acrylate polymer (ARON® A-6114 (ARON is a registered trademark in Japan, other countries, or both) produced by Toagosei Co., Ltd.) as a dispersant (water-soluble polymer) to 100 parts in terms of solid content of the water dispersion of the particulate polymer, and further adding 1,779 parts of deionized water.

The obtained composition for a non-aqueous secondary battery adhesive layer was used to evaluate inkjet ejection characteristics and dry adhesiveness. The results are shown in Table 1.

<Production of negative electrode web>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to a temperature of 50°C so as to initiate polymerization. At the point at which the polymerization conversion rate reached 96%, cooling was performed to quench the reaction to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to a temperature of 30°C or lower to yield a water dispersion containing the desired binder for a negative electrode mixed material layer.

Next, 100 parts of artificial graphite (volume-average particle diameter: 15.6 μm) as a negative electrode active material, 1 part in terms of solid content of a 2% aqueous solution of a sodium salt of carboxymethyl cellulose (produced by Nippon Paper Industries Co., Ltd.; product name: MAC350HC) as a viscosity modifier, and deionized water were mixed, were adjusted to a solid content concentration of 68%, and were subsequently further mixed at a temperature of 25°C for 60 minutes. The solid content concentration was further adjusted to 62% with deionized water, and then a further 15 minutes of mixing was performed at a temperature of 25°C. Deionized water and 1.5 parts in terms of solid content of the water dispersion containing the binder for a negative electrode mixed material layer described above were added to the resultant mixture, the final solid content concentration was adjusted to 52%, and a further 10 minutes of mixing was performed. The resultant mixture was subjected to defoaming under reduced pressure to yield a slurry composition for a non-aqueous secondary battery negative electrode having good fluidity.

The obtained slurry composition for a non-aqueous secondary battery negative electrode was applied onto both sides of copper foil of 20 μm in thickness serving as a current collector by a comma coater such as to have a thickness after drying of approximately 150 μm. The slurry composition was dried by conveying the copper foil inside an oven having a temperature of 60°C for 2 minutes at a speed of 0.5 m/min. Thereafter, 2 minutes of heat treatment was performed at a temperature of 120°C to obtain a pre-pressing negative electrode web. The pre-pressing negative electrode web was rolled by roll pressing to obtain a post-pressing negative electrode web having a negative electrode mixed material layer thickness of 80 μm.

<Production of positive electrode web>

A slurry composition for a non-aqueous secondary battery positive electrode was obtained by mixing 100 parts of LiCoO$_2$ having a volume-average particle diameter of 12 μm as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent, adjusting the total solid content concentration to 70%, and mixing these materials using a planetary mixer.

The obtained slurry composition for a non-aqueous secondary battery positive electrode was applied onto both sides of aluminum foil of 20 μm in thickness serving as a current collector by a comma coater such as to have a thickness after drying of approximately 150 μm. The slurry composition was dried by conveying the aluminum foil inside of an oven having a temperature of 60°C for 2 minutes at a speed of 0.5 m/min. Thereafter, 2 minutes of heat treatment was performed at a temperature of 120°C to obtain a positive electrode web.

The obtained positive electrode web was rolled using a roll press to obtain a post-pressing positive electrode web including positive electrode mixed material layers.

<Preparation of separator web>

A separator web (produced by Asahi Kasei Corporation; product name: ND412) made of polyethylene (PE) was prepared.

<Production of laminate for non-aqueous secondary battery>

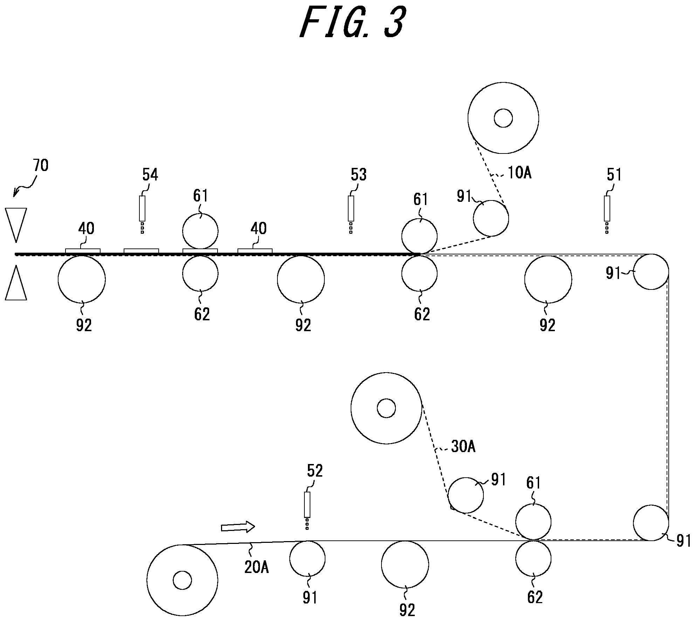

The produced composition for a non-aqueous secondary battery adhesive layer, negative electrode web, positive electrode web, and separator web were used to produce a laminate as illustrated in FIG. 3. Note that in FIG. 3, reference sign 91 indicates a conveying roller and reference sign 92 indicates a heating roller.

Specifically, a negative electrode web 20A fed from a negative electrode web roll was conveyed at a speed of 10 m/min while the composition for a non-aqueous secondary battery adhesive layer was supplied onto one surface of the negative electrode web 20A from an inkjet head of an inkjet-type coating machine 52 (KM1024 (shear-mode type) produced by Konica) and a second separator web 30A fed from a separator web roll was affixed to the negative electrode web 20A by pressure bonding rollers 61 and 62. The composition for a non-aqueous secondary battery adhesive layer was also supplied onto the other surface of the negative electrode web 20A from an inkjet head of an inkjet-type coating machine 51 (KM1024 (shear-mode type) produced by Konica), and a first separator web 10A fed from a separator web roll was affixed to the laminate of the negative electrode web 20A and the second separator web 30A by pressure bonding rollers 61 and 62. The composition for an adhesive layer was also supplied onto a surface at the opposite side of the first separator web 10A to the negative electrode web 20A from an inkjet head of an inkjet-type coating machine 53 (KM1024 (shear-mode type) produced by Konica), a pre-cut positive electrode 40 was placed thereon, and then the positive electrode 40 was affixed to the laminate of the first separator web 10A, the negative electrode web 20A, and the second separator web 30A by pressure bonding rollers 61 and 62. Moreover, the composition for an adhesive layer was supplied onto the positive electrode 40 from an inkjet head of an inkjet-type coating machine 54 (KM1024 (shear-mode type) produced by Konica), and then cutting was performed by a cutting machine 70 to obtain a laminate in which a second separator, a negative electrode, a first separator, and a positive electrode were stacked in this order. Note that a section where an electrode mixed material layer (positive electrode mixed material layer or negative electrode mixed material layer) was not formed was provided at an edge part of the current collector of each of the positive electrode 40 and the negative electrode web 20A, punching was performed such that a tab of a desired size was formed in advance, and stacking was performed such that a positive electrode tab and a negative electrode tab were disposed at the same edge side of affixing surfaces X and Y of the electrodes and separators.

The obtained laminate was used to evaluate electrolyte solution injectability. The result is shown in Table 1.

Note that affixing using pressure bonding rollers 61 and 62 was performed at a temperature of 25°C and a pressure of 2 MPa.

Moreover, the supplied composition for an adhesive layer was dried (drying temperature: 70°C; drying time: 1 second) by using heating rollers 92 for some of conveying rollers 91.

Furthermore, supply of the composition for an adhesive layer from the coating machines 51 to 54 was performed such that the composition for an adhesive layer had a uniform dotted pattern. The dot size was 100 $\mu$m in diameter with intervals between the dots set as 400 $\mu$m pitch. The mass per unit area of adhesive material was 0.2 g/m$^2$. Moreover, the ratio of coverage was measured and was determined to be 6.5%.

<Production of secondary battery>

A stack was produced by stacking five laminates produced as described above and performing 10 seconds of pressing at a temperature of 25°C and a pressure of 2 MPa. This stack was enclosed in an aluminum packing case serving as a case, and then electrolyte solution (solvent: ethylene carbonate/diethyl carbonate/vinylene carbonate = 68.5/30/1.5 (volume ratio); electrolyte: LiPF$_6$ of 1 M in concentration) was injected. An opening of the aluminum packing case was subsequently closed by heat sealing at a temperature of 150°C to produce a stacked lithium ion secondary battery having a capacity of 800 mAh. The obtained secondary battery was used to evaluate cycle characteristics. The result is shown in Table 1.

(Example 2)

Various operations, measurements, and evaluations were performed in the same way as in Example 1 with the exception that a product obtained by the following production method was used as a water dispersion containing a particulate polymer. The results are shown in Table 1.

<Production of particulate polymer>

A reactor including a stirrer was supplied with 100 parts of deionized water and 0.3 parts of ammonium persulfate. The gas phase was purged with nitrogen gas, and the temperature was raised to 80°C. Meanwhile, a monomer composition for core portion formation was obtained in a separate vessel by mixing 40 parts of deionized water, 0.2 parts of sodium dodecylbenzenesulfonate as an emulsifier, 27.3 parts of styrene as an aromatic vinyl monomer, 64.6 parts of 2-ethylhexyl acrylate as a non-fluorine-containing (meth)acrylic acid ester monomer, 3 parts of methacrylic acid as an acid group-containing monomer, and 0.1 parts of ethylene glycol dimethacrylate as a cross-linkable monomer. This monomer composition for core portion formation was continuously added into the reactor over 3 hours so as to perform a polymerization reaction at a temperature of 80°C. Polymerization was continued until a polymerization conversion rate of 95% was reached to yield a water dispersion containing a particulate polymer forming a core portion. Next, a monomer composition for shell portion formation containing 4.75 parts of styrene as an aromatic vinyl monomer and 0.25 parts of methacrylic acid as an acid group-containing monomer was continuously supplied into this water dispersion over 60 minutes, and polymerization was continued. At the point at which the polymerization conversion rate reached 98%, cooling was performed to quench the reaction to thereby produce a water dispersion containing a particulate polymer having a core-shell structure.

(Example 3)

Various operations, measurements, and evaluations were performed in the same way as in Example 1 with the exception that a product obtained by the following production method was used as a composition for a non-aqueous secondary battery adhesive layer. The results are shown in Table 1.

<Production of particulate polymer>

A reactor including a stirrer was supplied with 100 parts of deionized water and 0.3 parts of ammonium persulfate. The gas phase was purged with nitrogen gas, and the temperature was raised to 80°C. Meanwhile, a monomer composition for core portion formation was obtained in a separate vessel by mixing 40 parts of deionized water, 0.2 parts of sodium dodecylbenzenesulfonate as an emulsifier, 43.9 parts of styrene as an aromatic vinyl monomer, 48 parts of 2-ethylhexyl acrylate as a non-fluorine-containing (meth)acrylic acid ester monomer, 3 parts of methacrylic acid as an acid group-containing monomer, and 0.1 parts of ethylene glycol dimethacrylate as a cross-linkable monomer. This monomer composition for core portion formation was continuously added into the reactor over 3 hours so as to perform a polymerization reaction at a temperature of 80°C. Polymerization was continued until a polymerization conversion rate of 95% was reached to yield a water dispersion containing a particulate polymer forming a core portion. Next, a monomer composition for shell portion formation containing 4.7 parts of styrene as an aromatic vinyl monomer, 0.05 parts of methacrylic acid as an acid group-containing monomer, and 0.25 parts of acrylonitrile as a (meth)acrylonitrile monomer was continuously supplied into this water dispersion over 60 minutes, and polymerization was continued. At the point at which the polymerization conversion rate reached 98%, cooling was performed to quench the reaction to thereby produce a water dispersion containing a particulate polymer having a core-shell structure.

<Production of particulate binder>

A reactor including a stirrer was supplied with 90 parts of deionized water, 0.05 parts of sodium dodecylbenzenesulfonate (NEOPELEX G-15 produced by Kao Corporation) as an emulsifier, and 0.23 parts of ammonium persulfate. The gas phase was purged with nitrogen gas, and the temperature was raised to 70°C.

Meanwhile, a monomer composition was obtained in a separate vessel by mixing 50 parts of deionized water, 0.1 parts of sodium dodecylbenzenesulfonate as an emulsifier, 2.3 parts of methacrylic acid as an acid group-containing monomer, 12.5 parts of acrylonitrile as a (meth)acrylonitrile monomer, 79.9 parts of n-butyl acrylate as a non-fluorine-containing (meth)acrylic acid ester monomer, 3.8 parts of N-methylolacrylamide as a cross-linkable monomer, and 1.5 parts of acrylamide (AAm) as a (meth)acrylamide monomer. This monomer composition was continuously added into the reactor over 4 hours to perform polymerization. The reaction was carried out at 80°C during the addition. Once the addition was complete, a further 3 hours of stirring was performed at 80°C, and then the reaction was ended to produce a water dispersion containing a particulate binder that did not have a core-shell structure.

<Production of composition for non-aqueous secondary battery adhesive layer>

A composition for a non-aqueous secondary battery adhesive layer was obtained by adding 10 parts in terms of solid content of the water dispersion of the particulate binder, 60 parts of polyethylene glycol 600 as a polyalkylene glycol, 60 parts of glycerin as a low-molecular weight polyhydric alcohol, and 1 part in terms of solid content of an ammonium acrylate polymer (ARON® A-6114 produced by Toagosei Co., Ltd.) as a dispersant (water-soluble polymer) to 100 parts in terms of solid content of the water dispersion of the particulate polymer, and further adding 1,769 parts of deionized water.

(Example 4)

Various operations, measurements, and evaluations were performed in the same way as in Example 3 with the exception that a product obtained by the following production method was used as a water dispersion containing a particulate binder. The results are shown in Table 1.

<Production of particulate binder>

A 5 MPa pressure-resistant vessel A equipped with a stirrer was charged with 3.15 parts of styrene as an aromatic vinyl monomer, 1.66 parts of 1,3-butadiene as a cross-linkable monomer, 0.2 parts of sodium lauryl sulfate as an emulsifier, 20 parts of deionized water, and 0.03 parts of potassium persulfate as a polymerization initiator. These materials were thoroughly stirred, were subsequently heated to 60°C to initiate polymerization, and were reacted for 6 hours to yield seed particles.

After the above-described reaction, the temperature was raised to 75°C, and then with respect to the pressure-resistant vessel A, addition of a mixture containing 59.05 parts of styrene as an aromatic vinyl monomer, 31.34 parts of 1,3-butadiene as a cross-linkable monomer, 3.8 parts of itaconic acid as an acid group-containing monomer, 0.25 parts of tert-dodecyl mercaptan as a chain transfer agent, and 0.35 parts of sodium lauryl sulfate as an emulsifier was initiated from a separate vessel B that was charged with this mixture. Simultaneously to the start of this addition, addition of 1 part of potassium persulfate as a polymerization initiator was also initiated with respect to the pressure-resistant vessel A so as to initiate a second stage of polymerization.

At 4 hours after the start of the second stage of polymerization (after 70% of the overall monomer composition had been added), 1 part of 2-hydroxyethyl acrylate as a polar group-containing (meth)acrylic acid ester monomer was added to the pressure-resistant vessel A over 1.5 hours.

In other words, the overall monomer composition was 62.2 parts of styrene as an aromatic vinyl monomer, 33 parts of 1,3-butadiene as a cross-linkable monomer, 3.8 parts of itaconic acid as an acid group-containing monomer, and 1 part of 2-hydroxyethyl acrylate as a polar group-containing (meth)acrylic acid ester monomer.

Addition of the total amount of the mixture containing this monomer composition was completed at 5.5 hours after the start of the second stage of polymerization. Thereafter, the temperature was further raised to 85°C, and a reaction was performed for 6 hours.

At the point at which the polymerization conversion rate reached 97%, cooling was performed to quench the reaction. A mixture containing this polymerized product was adjusted to pH 8 through addition of 5% sodium hydroxide aqueous solution. Unreacted monomer was subsequently removed through thermal-vacuum distillation. Thereafter, cooling was performed to produce a water dispersion containing a particulate binder that did not have a core-shell structure.

(Example 5)

Various operations, measurements, and evaluations were performed in the same way as in Example 1 with the exception that in production of the composition for a non-aqueous secondary battery adhesive layer, polyethylene glycol 200 having a number-average molecular weight of 200 was used instead of polyethylene glycol 600. The results are shown in Table 1.

(Example 6)

Various operations, measurements, and evaluations were performed in the same way as in Example 1 with the exception that in production of the composition for a non-aqueous secondary battery adhesive layer, polypropylene glycol 400 having a number-average molecular weight of 400 was used instead of polyethylene glycol 600. The results are shown in Table 1.

(Example 7)

Various operations, measurements, and evaluations were performed in the same way as in Example 1 with the exception that in production of the composition for a non-aqueous secondary battery adhesive layer, polyethylene glycol 1,000 having a number-average molecular weight of 1,000 was used instead of polyethylene glycol 600. The results are shown in Table 1.

(Example 8)

Various operations, measurements, and evaluations were performed in the same way as in Example 1 with the exception that in production of the composition for a non-aqueous secondary battery adhesive layer, polyoxyethylene polyoxypropylene glycol having a number-average molecular weight of 1,102 (Adeka® Pluronic L-31 (Adeka is a registered trademark in Japan, other countries, or both) produced by Adeka Corporation) was used instead of polyethylene glycol 600. The results are shown in Table 1.

(Example 9)

Various operations, measurements, and evaluations were performed in the same way as in Example 1 with the exception that in production of the composition for a non-aqueous secondary battery adhesive layer, tetraethylene glycol monobutyl ether was used instead of polyethylene glycol 600. The results are shown in Table 1.

(Example 10)

Various operations, measurements, and evaluations were performed in the same way as in Example 1 with the exception that in production of the composition for a non-aqueous secondary battery adhesive layer, the used amount of polyethylene glycol 600 was changed to 20 parts, the used amount of water was changed to 1,817 parts, and 2 parts of carboxymethyl cellulose was used as a thixotropic agent. The results are shown in Table 1.

(Comparative Example 1)

Various operations, measurements, and evaluations were performed in the same way as in Example 1 with the exception that in production of the composition for a non-aqueous secondary battery adhesive layer, diethylene glycol was used instead of polyethylene glycol 600. The results are shown in Table 1.

(Comparative Example 2)

Various operations, measurements, and evaluations were performed in the same way as in Example 1 with the exception that in production of the composition for a non-aqueous secondary battery adhesive layer, polyethylene glycol 2,000 having a number-average molecular weight of 2,000 was used instead of polyethylene glycol 600. The results are shown in Table 1.

(Comparative Example 3)

Various operations, measurements, and evaluations were performed in the same way as in Example 1 with the exception that in production of the composition for a non-aqueous secondary battery adhesive layer, the used amount of polyethylene glycol 600 was changed to 10 parts and the used amount of glycerin was changed to 110 parts. The results are shown in Table 1.

In Table 1, shown below:

"BA" indicates butyl acrylate;
"MAA" indicates methacrylic acid;
"AN" indicates acrylonitrile;
"2EHA" indicates 2-ethylhexyl acrylate;
"St" indicates styrene;
"EDMA" indicates ethylene glycol dimethacrylate;
"PEG" indicates polyethylene glycol;
"PPG" indicates polypropylene glycol;
"EO-PO" indicates polyoxyethylene polyoxypropylene glycol;
"TGME" indicates tetraethylene glycol monobutyl ether;
"DEG" indicates diethylene glycol; and
"CMC" indicates carboxymethyl cellulose.

[Table 1]

| | | | | | Examples | | | | | | | | | | Comparative examples | | |
|---|---|---|---|---|---|---|---|---|---|---|---|---|---|---|---|---|---|
| | | | | | 1 | 2 | 3 | 4 | 5 | 6 | 7 | 8 | 9 | 10 | 1 | 2 | 3 |
| Composition for non-aqueous secondary battery adhesive layer | Particulate polymer | Chemical composition [parts by mass] | Core portion | BA | 91.1 | - | - | - | 91.1 | 91.1 | 91.1 | 91.1 | 91.1 | 91.1 | 91.1 | 91.1 | 91.1 |
| | | | | MAA | 1.9 | 3 | 3 | 3 | 1.9 | 1.9 | 1.9 | 1.9 | 1.9 | 1.9 | 1.9 | 1.9 | 1.9 |
| | | | | AN | 1.9 | - | - | - | 1.9 | 1.9 | 1.9 | 1.9 | 1.9 | 1.9 | 1.9 | 1.9 | 1.9 |
| | | | | 2EHA | - | 64.6 | 48 | 48 | - | - | - | - | - | - | - | - | - |
| | | | | St | - | 27.3 | 43.9 | 43.9 | - | - | - | - | - | - | - | - | - |
| | | | | EDMA | 0.1 | 0.1 | 0.1 | 0.1 | 0.1 | 0.1 | 0.1 | 0.1 | 0.1 | 0.1 | 0.1 | 0.1 | 0.1 |
| | | | Shell portion | St | 4.75 | 4.75 | 4.7 | 4.7 | 4.75 | 4.75 | 4.75 | 4.75 | 4.75 | 4.75 | 4.75 | 4.75 | 4.75 |
| | | | | MAA | 0.25 | 0.25 | 0.05 | 0.05 | 0.25 | 0.25 | 0.25 | 0.25 | 0.25 | 0.25 | 0.25 | 0.25 | 0.25 |
| | | | | AN | - | - | 0.25 | 0.25 | - | - | - | - | - | - | - | - | - |
| | | Mass proportion of shell portion among total of core portion and shell portion [%] | | | 5 | 5 | 5 | 5 | 5 | 5 | 5 | 5 | 5 | 5 | 5 | 5 | 5 |
| | | Glass-transition temperature [°C] | Core portion | | -40 | -18 | 35 | 35 | -40 | -40 | -40 | -40 | -40 | -40 | -40 | -40 | -40 |
| | | | Shell portion | | 105 | 105 | 110 | 110 | 105 | 105 | 105 | 105 | 105 | 105 | 105 | 105 | 105 |
| | | Volume-average particle diameter [nm] | | | 600 | 600 | 650 | 650 | 600 | 600 | 600 | 600 | 600 | 600 | 600 | 600 | 600 |
| | | Amount in terms of solid content [parts by mass] | | | 100 | 100 | 100 | 100 | 100 | 100 | 100 | 100 | 100 | 100 | 100 | 100 | 100 |

EP 4 489 206 A1

30

| | | | Examples | | | | | | | | | | Comparative examples | | |
|---|---|---|---|---|---|---|---|---|---|---|---|---|---|---|---|
| | | | 1 | 2 | 3 | 4 | 5 | 6 | 7 | 8 | 9 | 10 | 1 | 2 | 3 |
| | | Mass proportion of particulate polymer among composition for adhesive layer [%] | 5 | 5 | 5 | 5 | 5 | 5 | 5 | 5 | 5 | 5 | 5 | 5 | 5 |
| | Particulate binder | Glass-transition temperature [°C] | - | - | -15 | 10 | - | - | - | - | - | - | - | - | - |
| | | Volume-average particle diameter [nm] | - | - | 200 | 150 | - | - | - | - | - | - | - | - | - |
| | | Amount in terms of solid content [parts by mass] | - | - | 10 | 10 | - | - | - | - | - | - | - | - | - |
| | | Mass proportion of particulate binder among composition for adhesive layer [%] | - | - | 0.5 | 0.5 | - | - | - | - | - | - | - | - | - |
| | Polyalkylene glycol | Type | PEG | PEG | PEG | PEG | PEG | PPG | PEG | EO-PO | TGME | PEG | DEG | PEG | PEG |
| | | Number-average molecular weight | 600 | 600 | 600 | 600 | 200 | 400 | 1000 | 1102 | 206 | 600 | 106 | 2000 | 600 |
| | | Amount in terms of solid content [parts by mass] | 60 | 60 | 60 | 60 | 60 | 60 | 60 | 60 | 60 | 20 | 60 | 60 | 60 |
| | | Mass proportion among composition for adhesive layer [%] | 3 | 3 | 3 | 3 | 3 | 3 | 3 | 3 | 3 | 1 | 3 | 3 | 0.5 |
| | Low-molecular weight polyhydric alcohol | Glycerin [parts by mass] | 60 | 60 | 60 | 60 | 60 | 60 | 60 | 60 | 60 | 60 | 60 | 60 | 110 |
| | Dispersant | Ammonium acrylate polymer [parts by mass] | 1 | 1 | 1 | 1 | 1 | 1 | 1 | 1 | 1 | 1 | 1 | 1 | 1 |
| | Thixotropic agent | CMC [parts by mass] | - | - | - | - | - | - | - | - | - | 2 | - | - | - |

EP 4 489 206 A1

(continued)

| Evaluation results | | Examples | | | | | | | | | | Comparative examples | | |
|---|---|---|---|---|---|---|---|---|---|---|---|---|---|---|
| | | 1 | 2 | 3 | 4 | 5 | 6 | 7 | 8 | 9 | 10 | 1 | 2 | 3 |
| | Inkjet ejection characteristics | A | A | A | A | A | B | B | C | A | C | B | D | D |
| | Dry adhesiveness | A | A | A | A | C | A | B | C | C | C | C | D | D |
| | Electrolyte solution mjectability | A | A | A | A | A | B | A | A | A | C | B | B | D |
| | Cycle characteristics | A | A | B | B | C | B | A | A | C | C | D | B | D |

As can clearly be seen from Table 1, each of the compositions for an adhesive layer of Examples 1 to 10 can ensure inkjet ejection characteristics while also imparting excellent electrolyte solution injectability to a non-aqueous secondary battery, imparting excellent adhesiveness between battery members in a non-aqueous secondary battery, and causing a non-aqueous secondary battery to display excellent cycle characteristics.

INDUSTRIAL APPLICABILITY

According to the present disclosure, it is possible to provide a composition for a non-aqueous secondary battery adhesive layer that can ensure inkjet ejection characteristics while also imparting excellent electrolyte solution injectability to a non-aqueous secondary battery, imparting excellent adhesiveness between battery members in a non-aqueous secondary battery, and causing a non-aqueous secondary battery to display excellent cycle characteristics.

Moreover, according to the present disclosure, it is possible to provide an adhesive layer for a non-aqueous secondary battery, a battery member for a non-aqueous secondary battery, and a laminate for a non-aqueous secondary battery that can impart excellent electrolyte solution injectability to a non-aqueous secondary battery, impart excellent adhesiveness between battery members in a non-aqueous secondary battery, and cause a non-aqueous secondary battery to display excellent cycle characteristics.

Furthermore, according to the present disclosure, it is possible to provide a non-aqueous secondary battery having excellent electrolyte solution injectability, adhesiveness between battery members, and cycle characteristics.

Also, according to the present disclosure, it is possible to provide a method of producing a battery member for a non-aqueous secondary battery and a method of producing a laminate for a non-aqueous secondary battery that can impart excellent electrolyte solution injectability to a non-aqueous secondary battery, impart excellent adhesiveness between battery members in a non-aqueous secondary battery, and cause a non-aqueous secondary battery to display excellent cycle characteristics.

REFERENCE SIGNS LIST

| | |
|---|---|
| 10A | first separator web |
| 20A | negative electrode web |
| 30A | second separator web |
| 40 | positive electrode |
| 50 | droplet |
| 51-54 | coating machine (nozzle head) |
| 61, 62 | pressure bonding roller |
| 70 | cutting machine |
| 91 | conveying roller |
| 92 | heating roller |
| 300 | particulate polymer |
| 310 | core portion |
| 3105 | outer surface of core portion |
| 320 | shell portion |

**Claims**

1. A composition for a non-aqueous secondary battery adhesive layer comprising a particulate polymer, a polyalkylene glycol, and water, wherein

   the polyalkylene glycol includes an ethylene oxide unit, a propylene oxide unit, or a combination thereof,
   the polyalkylene glycol has a hydroxy group as one terminal group and has a hydroxy group or an alkoxy group having a carbon number of not less than 1 and not more than 6 as another terminal group,
   the polyalkylene glycol has a number-average molecular weight of not less than 150 and not more than 1,200, and
   content of the polyalkylene glycol is 20 parts by mass or more per 100 parts by mass of the particulate polymer.

2. The composition for a non-aqueous secondary battery adhesive layer according to claim 1, wherein the particulate polymer is a particulate polymer having a core-shell structure including a core portion and a shell portion at least partially covering an outer surface of the core portion.

3. The composition for a non-aqueous secondary battery adhesive layer according to claim 1 or 2, wherein the particulate polymer contains a polymer having a glass-transition temperature of 40°C or higher.

4. The composition for a non-aqueous secondary battery adhesive layer according to any one of claims 1 to 3, further comprising a water-soluble polymer as a dispersant.

5. An adhesive layer for a non-aqueous secondary battery obtained using the composition for a non-aqueous secondary battery adhesive layer according to any one of claims 1 to 4.

6. A battery member for a non-aqueous secondary battery comprising: a substrate; and the adhesive layer for a non-aqueous secondary battery according to claim 5 provided on the substrate, wherein the substrate is an electrode substrate or a separator substrate.

7. A method of producing a battery member for a non-aqueous secondary battery comprising:

   applying the composition for a non-aqueous secondary battery adhesive layer according to any one of claims 1 to 4 onto an electrode substrate or a separator substrate by an inkjet method; and
   drying the composition for a non-aqueous secondary battery adhesive layer that has been applied onto the electrode substrate or the separator substrate.

8. The method of producing a battery member for a non-aqueous secondary battery according to claim 7, wherein

   a substrate is the electrode substrate, and
   the composition for a non-aqueous secondary battery adhesive layer is applied onto an electrode mixed material layer of the electrode substrate.

9. A laminate for a non-aqueous secondary battery comprising an electrode and a separator, wherein the electrode and the separator are adhered via the adhesive layer for a non-aqueous secondary battery according to claim 5.

10. A method of producing a laminate for a non-aqueous secondary battery comprising:

    supplying an adhesive material to an affixing surface of at least one of an electrode and a separator; and
    pressing and affixing the electrode and the separator via the affixing surface to which the adhesive material has been supplied, wherein
    the adhesive material is obtained using the composition for a non-aqueous secondary battery adhesive layer according to any one of claims 1 to 4.

11. A non-aqueous secondary battery comprising the laminate for a non-aqueous secondary battery according to claim 9.

# FIG. 1

FIG. 2

EP 4 489 206 A1

FIG. 3

EP 4 489 206 A1

EP 4 489 206 A1

## INTERNATIONAL SEARCH REPORT

International application No.

**PCT/JP2023/003271**

### A. CLASSIFICATION OF SUBJECT MATTER

*H01M 50/414*(2021.01)i; *H01M 4/13*(2010.01)i; *H01M 10/058*(2010.01)i; *H01M 50/403*(2021.01)i; *H01M 50/443*(2021.01)i; *H01M 50/449*(2021.01)i

FI: H01M50/414; H01M4/13; H01M50/449; H01M50/403 D; H01M10/058; H01M50/443 E

According to International Patent Classification (IPC) or to both national classification and IPC

### B. FIELDS SEARCHED

Minimum documentation searched (classification system followed by classification symbols)

H01M50/414; H01M4/13; H01M10/058; H01M50/403; H01M50/443; H01M50/449

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-025093 A (LUCKY FILM CO LTD) 08 February 2016 (2016-02-08)<br>entire text, all drawings | 1-11 |
| A | WO 2012/060147 A1 (TORAY BATTERY SEPARATOR FILM CO., LTD.) 10 May 2012 (2012-05-10)<br>entire text, all drawings | 1-11 |
| A | WO 2020/246497 A1 (TEIJIN LIMITED) 10 December 2020 (2020-12-10)<br>entire text, all drawings | 1-11 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 April 2023** | **25 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

38

International application No.

**PCT/JP2023/003271**

| Patent document cited in search report | | | Publication date (day/month/year) | Patent family member(s) | | | Publication date (day/month/year) |
|---|---|---|---|---|---|---|---|
| JP | 2016-025093 | A | 08 February 2016 | CN<br>all<br>KR | 105273444<br>10-2016-0012083 | A<br>A | |
| WO | 2012/060147 | A1 | 10 May 2012 | US<br>all<br>CN<br>KR | 2013/0288103<br>103370196<br>10-2013-0125357 | A1<br>A<br>A | |
| WO | 2020/246497 | A1 | 10 December 2020 | US<br>all<br>EP<br>KR<br>CN | 2022/0200098<br>3919269<br>10-2021-0136100<br>113678312 | A1<br>A1<br>A<br>A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019221056 A1
- JP 2013145763 A